Europäisches Patentamt

European Patent Office

Office européen des brevets

(11) Publication number: **0 416 311 A2**

# EUROPEAN PATENT APPLICATION

(21) Application number: 90115274.4

(51) Int. Cl.⁵: **G06F 15/332**

(22) Date of filing: 09.08.90

(30) Priority: 06.09.89 US 403631

(43) Date of publication of application:
13.03.91 Bulletin 91/11

(84) Designated Contracting States:
DE FR GB

(71) Applicant: **International Business Machines
Corporation
Old Orchard Road
Armonk, N.Y. 10504(US)**

(72) Inventor: **Feig, Ephraim
91 North State Road
Briarcliff Manor, New York 10510(US)**
Inventor: **Winograd, Shmuel
235 Glendale Road
Scarsdale, New York 10583(US)**

(74) Representative: **Jost, Ottokarl, Dipl.-Ing.
IBM Deutschland GmbH Patentwesen und
Urheberrecht Schönaicher Strasse 220
W-7030 Böblingen(DE)**

(54) Multidimensional array processor and array processing method.

(57) An array-processing method is described comprising the steps of: (a) sampling a physical variable to obtain an input data array of real numeric data points representative of the physical variable, the input data array having a dimensionality of m, where m is an integer greater than or equal to two; (b)performing a scaled m-dimensional discrete cosine transform on the input data array, the scaled m-dimensional discrete cosine transform including the following operations in sequence, (b.1) performing pre-multiplication-stage addition/subtraction operations on the input data array to obtain pre-multiplication-stage output data, the pre-multiplication-stage addition/subtraction operations involving at most only trivial multiplication operations, the pre-multiplication stage addition/subtraction operations being carried out on a row-column basis; (b.2) performing multiplication-stage multiplication/addition/subtraction operations on pre-multiplication-stage output data to obtain multiplication-stage output data, the multiplication-stage multiplication/addition/subtraction operations being carried out on a direct row-ordered or column-ordered basis; and (b.3) performing post-multiplication stage addition/subtraction operations on multiplication-stage output data to obtain post-multiplication-stage output data, the post-multiplication-stage addition/subtraction operations involving at most only trivial multiplication operations, the post-multiplication stage addition/subtraction operations being carried out on a row-column basis; (c) quantizing the post-multiplication-stage output data to obtain quantized transformed output data, the quantizing of the post-multiplication- stage output data being carried out element-by-element in accordance with corresponding elements of a transform-scaling-compensated quantization matrix, each element of the transform-scaling-compensated quantization matrix being multiplied by a corresponding transform-scaling-compensation factor, each transform-scaling-compensation factor corresponding to a reciprocal of a diagonal element of a diagonal-matrix factor associated with the scaled m-dimensional discrete cosine transform; and (d) storing the quantized transformed output data.

FIG.1

# MULTIDIMENSIONAL ARRAY PROCESSOR AND ARRAY PROCESSING METHOD

### Field of the Invention

The present invention broadly concerns an array processor and array-processing method suitable for processing efficiently multidimensional arrays of numeric data. More particularily, the present invention concerns an array processor and array-processing method adapted for the analyzing, transforming, filtering, compressing, coding, decoding, reconstructing and the like of two or higher dimensional data arrays, such as two-dimensional image data arrays.

### Background Art

A picture of other planar visual image can be accurately represented numerically by dividing the image into a two-dimensional array of sufficiently-small picture elements and assigning a numeric value to each picture element which is appropriately representative of the brightness or other visual quality of the image at the picture element. The various numeric values in a collection of such image data representing a visual image are conveniently indexed by two independent indices which represent the two coordinates which define the location of the picture element in the image. Consequently, a collection of numeric values representing a planar visual image can be conveniently treated as a two-dimensional array of numbers.

Two-dimensional arrays of image data can be processed digitally in a digital computer or other digital processor - for example, to analyze the image represented by the data or to alter the image to enhance the display of certain aspects of the image.

A particularly important application of digital processing of two-dimensional arrays of numeric data representing visual images has the goal of reducing the number of numeric values needed to represent a given image without unduly diminishing the visual quality of the image. If the number of image-data values needed to represent an image satisfactorily can be reduced, the number of digital representations of images which can be stored in a given amount of digital memory can be increased and the speed with which a digital representation of an image can be transmitted digitally from one point to another can be increased. A digital processing technique which serves to reduce the number of numeric values needed to represent a visual image is referred to generally as an image-data compression technique.

The discrete cosine transform plays an important role in digital image processing. Of particular importance is the two-dimensional discrete cosine transform on two-dimensional arrays of points. Often in image-processing applications two-dimensional discrete cosine transforms are followed by a quantization step. In particular, the quantized discrete cosine transform has been widely used in data compression techniques for continuous-tone images. Among the types of two-dimensional arrays of image data most widely used in conventional image-data compression techniques are square 8x8 arrays, square 16x16 arrays, and rectangular 16x8 arrays.

Given a two-dimensional $K \times K$ array denoted $x(k_1,k_2)$, $0 \leq k_1, k_2 \leq K-1$, of real input data, the output of a two-dimensional discrete cosine transform ("DCT") is defined to be

$$DCT(n_1,n_2) \equiv c(n_1) \ c(n_2) \sum_{k_1=0}^{K-1} \sum_{k_2=0}^{K-1} cos\left(\frac{\pi n_1(2k_1+1)}{2K}\right) cos\left(\frac{\pi n_2(2k_2+1)}{2K}\right) x(k_1,k_2),$$

where $c(0) = \sqrt{1/K}$ and $c(n) = \sqrt{2/K}$ for $1 \leq n \leq K-1$.

Let C denote a $K \times K$ matrix such that for $0 \leq k,n \leq K-1$, its $(n+1,k+1)$ entry is $c(n) \cos[\pi n(2k+1)/2K]$, and denote by $C \otimes C$ the direct product of the matrix C with itself. The operation "$\otimes$" is also referred to as a tensor product or a Kroenecker product. Let x denote the $K^2$-dimensional column vector such that for $0 \leq k_1$, $k_2 \leq K-1$, its $k_1 K + k_2$ entry is $x(k_1,k_2)$. Such a description of the input data x is referred to as a column-major order. The output of the two-dimensional discrete cosine transform on $K \times K$ points, written in column-major order, equals the matrix-vector product $(C \otimes C)x$.

Heretofore, the most common way of implementing the two-dimensional discrete cosine transform was via a nested two-stage application of a one-dimensional discrete cosine transform referred to as the "row-column" method. See A. K. Jain Fundamentals of Digital Image Processing, (Prenctice Hall, Englewood Cliffs, New Jersey, 1989), pages 134-135. A convenient way of relating the row-column method to the matrix of the two-dimensional discrete cosine transform for $K^2$ points is via the following matrix identity:

$(C \otimes C) = (CI \otimes IC) = (C \otimes I)(I \otimes C) = P(I \otimes C)P^{-1}(I \otimes C),$

where I is the $K \times K$ identity matrix and P is a permutation matrix referred to as the "perfect-shuffle" permutation matrix. The perfect-shuffle permutation matrix P is a matrix for which $P(A \otimes B) P^{-1} = B \otimes A$ for all matrices A and B. The row-column method yields a procedure which calls on a K-point one-dimensional discrete cosine transform 2K times. Consequently, a straightforward conventional application of the row-column method uses $2K \times K^2 = 2K^3$ multiplications and $2K \times K(K-1) = 2K^2(K-1)$ additions and subtractions. Furthermore, for a circuit implementing such a row-column method, every path in the circuit in general contains a second-stage multiply involving a factor which is a linear combination of previously-computed first-stage multiplies. As a result, in order to guarantee some prescribed accuracy in the final output when the computation is done with integer arithmetic, the second-stage multiplies must involve significantly larger integers than the prescribed accuracy of the output.

In part because of its central role in techniques for image data compression, the quantized discrete cosine transform has received much attention. A number of procedures for carrying out the discrete cosine transform computation have been proposed. In image data compression applications, the output of the discrete cosine transform is usually followed by a quantization, in which case it is ordinarily sufficient to compute conveniently scaled outputs of the transform, since the scale factors of the discrete cosine transform can be merged in the quantization. The merger of scale factors into the quantization matrix can lead to certain computational savings. Conventional procedures for carrying out the discrete cosine transform have the disadvantage that implementations of such procedures ordinarily required that at least some of the computation paths - typically, most of the computation paths - involved two or more multiplications in sequence.

A procedure for computing a one-dimensional 8-point discrete cosine transform followed by scalar quantization is described in an article published in Transactions of the IEICE, volume E 71, pages 1095 through 1097, (November 1988) by Arai et al. ("the Arai et al. publication"). According to the publication, five multiplications and twenty-nine additions are required for the one-dimensional 8-point transform of the article. It is indicated further that the transform method of the article is effective for parallel implementation in hardware chips, since each signal path has at most one multiplication. It is stated that the sequence of 8-point discrete cosine transform and scalar quantization is effective in image data compression. No method for employing the one-dimensional 8-point discrete-cosine-transform procedure of the publication to perform a two-dimensional 8x8 discrete cosine transform on an 8x8 two-dimensional array of data is disclosed in the Arai et al. publication. As noted above, the row-column method is conventionally used to perform a two-dimensional discrete cosine transform using two sequential applications of a one-dimensional discrete cosine transform. If the "row-column" method is employed to perform a two-dimensional 8x8 discrete cosine transform using two sequential applications of the one-dimensional 8-point discrete cosine transform procedure of the Arai et al. publication, a total of 8x5 + 8x5, or 80 multiplications are required. Moreover, the multiplications are nested two deep in such a sequential row-column procedure. Such nested multiplications are in general difficult to implement in hardware chips. Moreover, a second stage of such two-deep nested multiplications requires a greater word length than first stage to avoid loss of accuracy due to rounding or truncation errors. Two stages of nested multiplications in the conventional row-column procedure takes substantially longer than a single stage of multiplications, since the multiplications of the first stage must in general be completed before the multiplications of the second stage can begin.

A hardwired two-dimensional discrete cosine transform image processor designated the "IMS A121" has been described in a product announcement dated March 1989 distributed by Inmos Corporation. The image processor operates on blocks of data with a fixed 8x8 size. The image processor includes two matrix multiply arrays, each of which performs an 8x8 matrix multiplication in 64 clock cycles. One matrix multiply array is located downstream of the other. Sequential multiplication stages in general lead to delays. According to the product announcement, with data sampled at the input of the image processor at the clock frequency, the resultant output appears 128 clock cycles later.

## Summary of the Present Invention

The present invention involves an array processor and array-processing method for performing a multidimensional discrete cosine transform on an array of data of dimension two or greater in which each computation path requires at most one nontrivial multiplication.

As used herein, the term a "trivial multiplication" is a multiplication by 0, ± 1, and ± (2)$^n$, where n is a positive or negative integer. A nontrivial multiplication is a multiplication by a number other than one of the numbers specified in the definition of a trivial multiplication.

The array-processing method of the invention comprises the step of sampling a physical variable to obtain an input data array of real numeric data points representative of the physical variable. The input data array has a dimensionality of m, where m is an integer greater than or equal to two.

The array-processing method of the invention further comprises the step of performing a scaled m-dimensional discrete cosine transform on the input data array. The scaled m-dimensional discrete cosine transform includes the following operations in sequence: performing pre-multiplication-stage addition/subtraction operations of the input data array to obtain pre-multiplication-stage output data, performing multiplication-stage multiplication/addition/subtraction operations on pre-multiplication-stage output data to obtain multiplication-stage output data, and performing post-multiplication stage addition/subtraction operations on multiplication-stage output data to obtain post-multiplication-stage output data. The pre-multiplication stage and post-multiplication-stage addition/subtraction operations involve at most only trivial multiplication operations and are carried out on a row-column basis. The multiplication-stage multiplication/addition/subtraction operations are carried out on a direct row-ordered or column-ordered basis.

The array-processing method of the invention further includes the step of quantizing the post-multiplication-stage output data to obtain quantized transformed output data. The quantizing of the post-multiplication-stage output data is carried out element-by-element in accordance with corresponding elements of a transform-scaling-compensated quantization matrix. Each element of the transform-scaling-compensated quantization matrix is multiplied by a corresponding transform-scaling-compensation factor. Each transform scaling factor corresponds to a reciprocal of a diagonal element of a diagonal-matrix factor associated with the scaled m-dimensional discrete cosine transform.

The array processor of the invention is a circuit which implements the array-processing method of the invention.

The array processor of the present invention is applicable to data arrays of any arbitrary number of dimensions, although at the present time its greatest application is expected to be in two and possibly three dimensions.

A preferred two-dimensional 8x8 discrete-cosine-transform procedure of the array-processing method of the invention calls for 54 nontrivial multiplications, 4 to 6 multiplications by either $\frac{1}{2}$ or 2, depending on the particular implementation, and 462 additions and subtractions, followed by a quantization step, which involves 64 multiplications. The preferred array-processing method of the invention thus compares favorably with the one-dimensional discrete cosine transform procedure of the Arai et al. publication applied to two-dimensions using the row-column method discussed above, which requires 80 multiplications and 464 additions and subtractions before quantization, or an 8x8 two-dimensional discrete-cosine-transform procedure of a Vetterli publication (M. Vetterli, Proc. ICASSP-85, pages 1538-1541, Tampa, March 1985), which requires 83 multiplications and 460 additions and subtractions before quantization.

An advantage of preferred discrete-cosine-transform procedures of the array-processing method of the invention is that only a single stage of multiplication operations is required. Each computation path of such preferred discrete-cosine-transform procedures of the invention requires at most only a single nontrivial multiplication. Such procedures can be economically implemented in a hardwired array-processor circuit relative to conventional discrete cosine transform procedures which require nested multiplication operations. Moreover, the computation paths in such a preferred array processor of the invention are essentially parallel, which permits extremely high-speed operation. Moreover, the use of only a single multiplication stage in such preferred array processor circuits of the invention permits integer multiplication to be used without incurring undue penalties with respect to word length or accuracy. For example, the 8x8 two-dimensional discrete-cosine-transform procedure of the array-processing method invention has been carried out with high accuracy on 8x8 input data arrays of 8-bit word length using integer multiplication in which the results of the multiplications did not exceed 15 bits.

The array processor of the invention is particularly suitable for image processing applications such as image data compression because of its high speed and accuracy. The advantages of the array processor of the invention are also of great value in two-dimensional data analysis, filtering, coding and decoding applications.

Brief Description of the Drawings

Preferred embodiments of the invention are described below with reference to the following drawings.

Figs. 1 through 9 together constitute a flow diagram of a preferred 8x8 two-dimensional discrete-cosine-transform procedure employed in the array-processing method of the present invention.

Fig. 1 is an overall flow diagram of the preferred 8x8 two-dimensional discrete-cosine-transform procedure. In Fig. 1 and in the following Figs. 2 through 9, data flows generally from left to right.

Fig. 2 is a flow diagram of a first 8-point addition/subtraction operation designated $R_1$ in the flow diagram of Fig. 1. In Fig. 2 and in the following Figs. 3 through 9, an arrowhead in a data-flow path symbolizes a multiplication of the data passing along the path by -1. The convergence of two or more data-flow paths in a generally left-to-right sense at a node identified by a heavy black dot indicates that the data from the respective data-flow paths are summed at the node.

Fig. 3 is a flow diagram of a first 8-point multiplication operation designated $M_1$ in the flow diagram of Fig. 1. The boxes in the flow diagram of Fig. 3 and in the following Fig. 4 signify multiplication by the factors specified in the respective boxes.

Fig. 4 is a flow diagram of a second 8-point multiplication operation designated $M_2$ in the flow diagram of Fig. 3.

Fig. 5 is a flow diagram of a 16-point multiplication operation designated $M_3$ in the flow diagram of Fig. 1.

Figs. 6 and 7 are flow diagrams respectively of a first and a second two-point multiplication operation designated respectively $Q_1$ and $Q_2$ in the flow diagram of Fig. 5. The boxes in the flow diagrams of Figs. 6 and 7 signify multiplication by the factors identified in the respective boxes. The factors are specified in Figs. 3 and 4.

Fig. 8 is a flow diagram of a 4-point multiplication operation designated $Q_3$ in the flow diagram of Fig. 5. The rectangular and diamond-shaped boxes signify multiplication by the factors identified in the respective boxes.

Fig. 9 is a flow diagram of a second 8-point addition/subtraction operation designated $R_2$ in the flow diagram of Fig. 1.

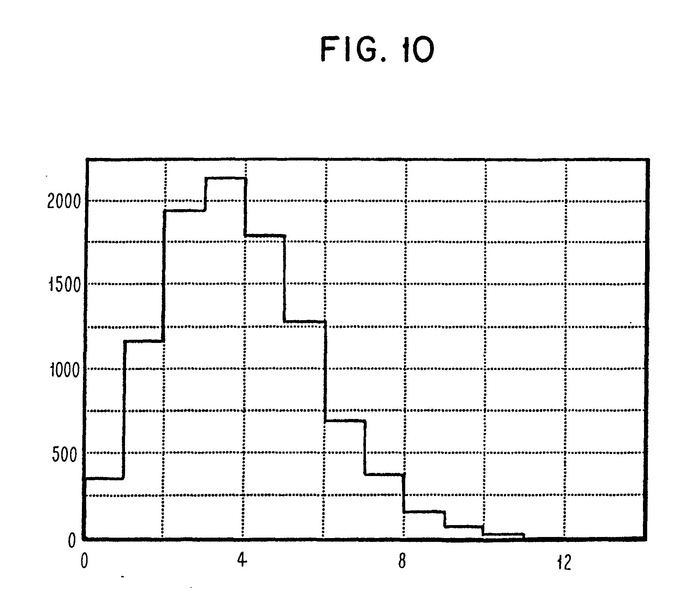

Fig. 10 is a histogram of the results of an experiment which provides a measure of the accuracy of a preferred two-dimensional 8x8 discrete-cosine-transform procedure of the array-processing method of the invention followed by a corresponding inverse discrete-cosine-transform procedure. The experiment involved about 10,000 runs using 8x8 two-dimensional arrays of random 8-bit data points. The preferred forward and inverse discrete cosine transform procedures were carried out using 15-bit precision integer multiplication. Accuracy was determined by comparing the results so obtained with corresponding results obtained substituting a conventional inverse discrete-cosine-transform procedure using 64-bit precision multiplication. The histogram of Fig. 10 records any deviation of plus or minus one bit in the results.

## Description of Preferred Embodiments

### A. Factorization of the Discrete Cosine Transformation

A one-dimensional discrete Fourier transform can be written as follows, where

$$w = e^{\pi i / 2K}$$

$$\hat{x}_n = \sum_{k=0}^{2K-1} x_k \, \omega^{2kn} .$$

If $x_k = x_{2k-k-1}$, then the preceding equation implies:

$$\frac{1}{2}\,\hat{x}_n\,\omega^n \;=\; \frac{1}{2}\sum_{k=0}^{2K-1} x_k\,\omega^{(2k+1)n}$$

$$=\; \frac{1}{2}\sum_{k=0}^{K-1} x_k\left(\omega^{(2k+1)n}+\omega^{-(2k+1)n}\right)$$

$$=\; \sum_{k=0}^{K-1} x_k\,\cos\left(\frac{\pi n(2k+1)}{2K}\right).$$

If the $x_k$ are real numbers, then the preceding equation implies that the products $x_n\omega^n$ are real numbers as well.

Write $x_n = a_n + ib_n$, with a, b real. Then the product

$$\hat{x}_n\omega^n \;=\; \left(a_n+ib_n\right)\left(\cos\frac{\pi n}{2K}+i\sin\frac{\pi n}{2K}\right)$$

$$=\; \left(a_n\cos\frac{\pi n}{2K}-b_n\sin\frac{\pi n}{2K}\right)+i\left(a_n\sin\frac{\pi n}{2K}+b_n\cos\frac{\pi n}{2K}\right)$$

The imaginary part above is 0, so that

$$b_n \;=\; -a_n\,\sin\frac{\pi n}{2K}\,\sec\frac{\pi n}{2K}\,.$$

Substituting into the real part of the right hand side of the previous equation yields

$$\hat{x}_n\omega^n \;=\; a_n\sec\frac{\pi n}{2K}\;=\; Re\,\hat{x}_n\,\sec\frac{\pi n}{2K}\,,$$

where Re $x_n$ denotes the real part of $x^n$. Thus, as has been recognized before, to compute the one-dimensional discrete cosine transform on a real vector of a given length, one can compute the real parts of the first half of the outputs of a discrete Fourier transform on a double-length vector formed by copying the components of the given vector in the original order in the lower half of the double-length vector and copying the components of the given vector in a reverse order in the upper half of the double-length vector. The real parts thus obtained are multiplied by $1/\sqrt{2}$ for n = 0 and by $\sec(\pi n/2K)$ for n≠0. Obtaining the real part of a discrete Fourier transform is a linear operation on real vectors. Therefore, if D is defined to be a K×K diagonal matrix whose (1,1) entry is $\sqrt{2}$ and whose (m,m) entry for 2≤m≤K is 2sec[(m-1)$\pi$/2K], then the one-dimensional discrete cosine transform, matrix C can be factored as C = DF, where F is the matrix of the linear transformation acting on the real input vector to yield the real parts of the first K terms of the doubled discrete Fourier transform.

The two-dimensional discrete-cosine-matrix can be written C⊗C = (DF⊗DF) = (D⊗D) (F⊗F).

The matrix D⊗D is diagonal. When the discrete cosine transform is followed by quantization, one may compute only the product by the matrix F⊗F and absorb the diagonal factor D⊗D in the quantization.

Using a procedure set forth previously in a publication by one of us, S. Wingograd, Math. of Computations, volume 32, pages 175-199, (1978), the matrix F can be factored as follows:

F = PBMA,

where A and B are rational matrices, P is a permutation matrix, and M may be regarded as a multiplicative "core" of the discrete Fourier transform. The above factorization of the matrix F provides a procedure for multiplying by the matrix F which sandwiches its multiplication operations between operations that only involve additions and subtractions, and concludes with a permutation.

Consider now multiplication by the direct product matrix F⊗F. A standard result on tensor products of matrices yields the equation

F⊗F = PBMA ⊗ PBMA = (P⊗P) (B⊗B) (M⊗M) (A⊗A).

The direct product matrix P⊗P is a permutation matrix corresponding to a two-dimensional bit reversal. Implementing the products involving A⊗A and B⊗B will involve additions and subtractions only. These can be carried out in a standard row-column or nested fashion.

The matrix M is block diagonal. Moreover, each block can be viewed as an element in the representation of some polynomial quotient ring. The tensor product of such rings is a direct sum of fields. This fact can be used to decompose the direct product matrix M⊗M into a block diagonal form, each of whose blocks is again an element in the representation of some polynomial quotient ring. Known techniques for handling polynomial products can be used on each of these blocks.

### B. Factorization of the Inverse Discrete Cosine Transform

The discrete-cosine-transform matrix is orthogonal, which means that its inverse is its transpose. Therefore

$(C⊗C)^{-1} = (C^{-1}⊗C^{-1}) = (C^t⊗C^t) = (F^tD⊗F^tD) = (F^t⊗F^t) (D⊗D).$

As in the preceding subsection A, $(F^t⊗F^t) = (B^t⊗B^t)(M^t⊗M^t) (A^t⊗A^t) (P^t⊗P^t)$, where matrix multiplication by the matrices involving the A and B matrices require only additions and subtractions, and $(M^t \times M^t)$ is block diagonal with entries which can be viewed as elements in the representation of polynomial rings. The direct product matrix D⊗D is diagonal. These observations lead to an efficient procedure for inverting the two-dimensional quantized discrete cosine transform.

### C. The 8 x 8 Two-Dimensional Discrete Cosine Transform

For the particular case of an 8 x 8 two-dimensional discrete cosine transform, the results of subsection A above provide the factorization

$C_8 = D_8 P_8 B_8 M_8 A_8,$

where $D_8$ is the 8 x 8 diagonal matrix whose (1,1) entry is $\sqrt{2}/4$ and whose (j,j) entry for j≠1 is $\frac{1}{4}$ sec[$^\pi$(j-1)-/16].

$$
A_8 = \begin{pmatrix}
1 & 1 & 1 & 1 & 1 & 1 & 1 & 1 \\
1 & -1 & -1 & 1 & 1 & -1 & -1 & 1 \\
1 & 1 & -1 & -1 & -1 & -1 & 1 & 1 \\
1 & 0 & 0 & -1 & -1 & 0 & 0 & 1 \\
0 & 1 & 1 & 0 & 0 & -1 & -1 & 0 \\
1 & 0 & 0 & 0 & 0 & 0 & 0 & -1 \\
0 & 0 & -1 & -1 & 1 & 1 & 0 & 0 \\
1 & 1 & 0 & 0 & 0 & 0 & -1 & -1
\end{pmatrix} ,
$$

$$
M_8 = \begin{pmatrix}
1 & 0 & 0 & 0 & 0 & 0 & 0 & 0 \\
0 & 1 & 0 & 0 & 0 & 0 & 0 & 0 \\
0 & 0 & \sqrt{2}/2 & 0 & 0 & 0 & 0 & 0 \\
0 & 0 & 0 & 1 & 0 & 0 & 0 & 0 \\
0 & 0 & 0 & 0 & \sqrt{2}/2 & 0 & 0 & 0 \\
0 & 0 & 0 & 0 & 0 & 1 & 0 & 0 \\
0 & 0 & 0 & 0 & 0 & 0 & -\cos(\pi/8) & -\cos(3\pi/8) \\
0 & 0 & 0 & 0 & 0 & 0 & -\cos(3\pi/8) & \cos(\pi/8)
\end{pmatrix} ,
$$

$$
B_8 = \begin{pmatrix}
1 & 0 & 0 & 0 & 0 & 0 & 0 & 0 \\
0 & 1 & 0 & 0 & 0 & 0 & 0 & 0 \\
0 & 0 & 1 & 1 & 0 & 0 & 0 & 0 \\
0 & 0 & -1 & 1 & 0 & 0 & 0 & 0 \\
0 & 0 & 0 & 0 & -1 & 1 & 1 & 0 \\
0 & 0 & 0 & 0 & 1 & 1 & 0 & 1 \\
0 & 0 & 0 & 0 & 1 & 1 & 0 & -1 \\
0 & 0 & 0 & 0 & -1 & 1 & -1 & 0
\end{pmatrix} ,
$$

and

$$
P_8 = \begin{pmatrix}
1 & 0 & 0 & 0 & 0 & 0 & 0 & 0 \\
0 & 0 & 0 & 0 & 0 & 1 & 0 & 0 \\
0 & 0 & 1 & 0 & 0 & 0 & 0 & 0 \\
0 & 0 & 0 & 0 & 0 & 0 & 0 & 1 \\
0 & 1 & 0 & 0 & 0 & 0 & 0 & 0 \\
0 & 0 & 0 & 0 & 1 & 0 & 0 & 0 \\
0 & 0 & 0 & 1 & 0 & 0 & 0 & 0 \\
0 & 0 & 0 & 0 & 0 & 0 & 1 & 0
\end{pmatrix} .
$$

This identity can be verified by direct computation. It may be obtained following a construction generally along the lines of one given in the Winograd publication cited above. That construction yields the further factorizations

$A_8 = R_3 R_2 R_1$ and $B_8 = S_2 S_1$,

where

$$R_1 = \begin{pmatrix} 1 & 0 & 0 & 0 & 0 & 0 & 0 & 1 \\ 0 & 1 & 0 & 0 & 0 & 0 & 1 & 0 \\ 0 & 0 & 1 & 0 & 0 & 1 & 0 & 0 \\ 0 & 0 & 0 & 1 & 1 & 0 & 0 & 0 \\ 0 & 0 & 0 & 1 & -1 & 0 & 0 & 0 \\ 0 & 0 & 1 & 0 & 0 & -1 & 0 & 0 \\ 0 & 1 & 0 & 0 & 0 & 0 & -1 & 0 \\ 1 & 0 & 0 & 0 & 0 & 0 & 0 & -1 \end{pmatrix}$$

$$R_2 = \begin{pmatrix} 1 & 0 & 0 & 1 & 0 & 0 & 0 & 0 \\ 0 & 1 & 1 & 0 & 0 & 0 & 0 & 0 \\ 0 & 1 & -1 & 0 & 0 & 0 & 0 & 0 \\ 1 & 0 & 0 & -1 & 0 & 0 & 0 & 0 \\ 0 & 0 & 0 & 0 & -1 & -1 & 0 & 0 \\ 0 & 0 & 0 & 0 & 0 & 1 & 1 & 0 \\ 0 & 0 & 0 & 0 & 0 & 0 & 1 & 1 \\ 0 & 0 & 0 & 0 & 0 & 0 & 0 & 1 \end{pmatrix},$$

$$R_3 = \begin{pmatrix} 1 & 1 & 0 & 0 & 0 & 0 & 0 & 0 \\ 1 & -1 & 0 & 0 & 0 & 0 & 0 & 0 \\ 0 & 0 & 1 & 1 & 0 & 0 & 0 & 0 \\ 0 & 0 & 0 & 1 & 0 & 0 & 0 & 0 \\ 0 & 0 & 0 & 0 & 0 & 1 & 0 & 0 \\ 0 & 0 & 0 & 0 & 0 & 0 & 0 & 1 \\ 0 & 0 & 0 & 0 & 1 & 0 & 0 & 0 \\ 0 & 0 & 0 & 0 & 0 & 0 & 1 & 0 \end{pmatrix},$$

$$S_1 = \begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 1 & 0 & 0 & 0 & 0 \\ 0 & 0 & -1 & 1 & 0 & 0 & 0 & 0 \\ 0 & 0 & 0 & 0 & 0 & 0 & 1 & 0 \\ 0 & 0 & 0 & 0 & 1 & 1 & 0 & 0 \\ 0 & 0 & 0 & 0 & 0 & 0 & 0 & 1 \\ 0 & 0 & 0 & 0 & -1 & 1 & 0 & 0 \end{pmatrix},$$

and

$$S_2 = \begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & 1 \\ 0 & 0 & 0 & 0 & 0 & 1 & 1 & 0 \\ 0 & 0 & 0 & 0 & 0 & 1 & -1 & 0 \\ 0 & 0 & 0 & 0 & -1 & 0 & 0 & 1 \end{pmatrix}.$$

Now observe that evaluating products of arbitrary 8-dimensional vectors by the matrices $R_1$, $R_2$, $R_3$, $S_1$, $S_2$ require additions and subtractions only. In fact, these products can be computed with 8, 7, 3, 4, 4 additions and subtractions, respectively. The product with the direct product matrix $A_8 \otimes A_8$ is first evaluated using the standard row-column method; that is, all the rows of the input matrix are first multiplied by the matrix $A_8$ and then all the columns of the resulting matrix are multiplied by $A_8$. The product by $A_8$ may be done via the factorization $A_8 = R_3 R_2 R_1$ with 18 additions and subtractions. Since this is done 16 times, computing the product by $A_8 \otimes A_8$ is done with 288 additions and subtractions. Analogously, the product by $B_8 \otimes B_8$ is done in row-column fashion with 128 additions and subtractions.

The computation of the product by $M_8 \otimes M_8$ will not be done in row-column fashion. Rather, the following matrix identity is used:

$$M_8 \otimes M_8 = \begin{bmatrix} M_8 & & & & & & & \\ & M_8 & & & & & & \\ & & \frac{\sqrt{2}}{2}M_8 & & & & & \\ & & & M_8 & & & & \\ & & & & \frac{\sqrt{2}}{2}M_8 & & & \\ & & & & & M_8 & & \\ & & & & & & N \otimes M_8 \end{bmatrix}$$

where

$$N = \begin{pmatrix} -\cos(\pi/8) & -\cos(3\pi/8) \\ -\cos(3\pi/8) & \cos(\pi/8) \end{pmatrix} .$$

Thus, the first, second, fourth and sixth columns of the input data matrix $x(k_1,k_2)$ will each be multiplied by the matrix $M_8$. Each of these column/matrix products will involve two multiplications by $\sqrt{2}/2$ plus the product by $N$, which can be done with three multiplications and 3 additions and subtractions. The third and fifth columns of the input data matrix $x(m_1,m_2)$ will be multiplied by $(\sqrt{2}/2) M_8$. Each of these column/matrix multiplications can be done with four multiplications by $(\sqrt{2}/2)$, two trivial multiplications by 1/2, plus the product by the 2x2 matrix $(\sqrt{2}/2)N$, which can be done with three multiplications and three additions and subtractions. The seventh and eighth columns will be handled simultaneously to account for the matrix direct product by $N \otimes M_8$. The procedures for this subpart of the computation is based on the following matrix identity:

$$M_8 \otimes N = \begin{bmatrix} N & & & & & & & \\ & N & & & & & & \\ & & \frac{\sqrt{2}}{2}N & & & & & \\ & & & N & & & & \\ & & & & \frac{\sqrt{2}}{2}N & & & \\ & & & & & N & & \\ & & & & & & N \otimes N \end{bmatrix} .$$

A 16-dimensional column vector v is formed by interleaving the entries of the seventh and eight rows. The first, second, fourth and sixth pairs of entries of v are each multiplied by N, while the third and fifth pairs are multiplied by $(\sqrt{2}/2)N$. Each of these takes three multiplications, and three additions and subtractions. Finally, the seventh and eights pairs of entries are handled simultaneously. One observes that

$$N \otimes N = \begin{pmatrix} 1 & 0 & 1 & 0 \\ 0 & 1 & 0 & 1 \\ 0 & 1 & 0 & -1 \\ -1 & 0 & 1 & 0 \end{pmatrix} \begin{pmatrix} \sqrt{2}/4 & \sqrt{2}/4 & 0 & 0 \\ \sqrt{2}/4 & -\sqrt{2}/4 & 0 & 0 \\ 0 & 0 & 1/2 & 0 \\ 0 & 0 & 0 & -1/2 \end{pmatrix} \begin{pmatrix} 1 & 0 & 0 & -1 \\ 0 & 1 & 1 & 0 \\ 1 & 0 & 0 & 1 \\ 0 & 1 & -1 & 0 \end{pmatrix}$$

Using this factorization, the product by N ⊗ N can be done with two multiplications by √2/4and ten additions and subtractions.

Altogether, the procedure calls for 54 multiplications, 462 additions and subtractions, and six multiplications by 1/2.

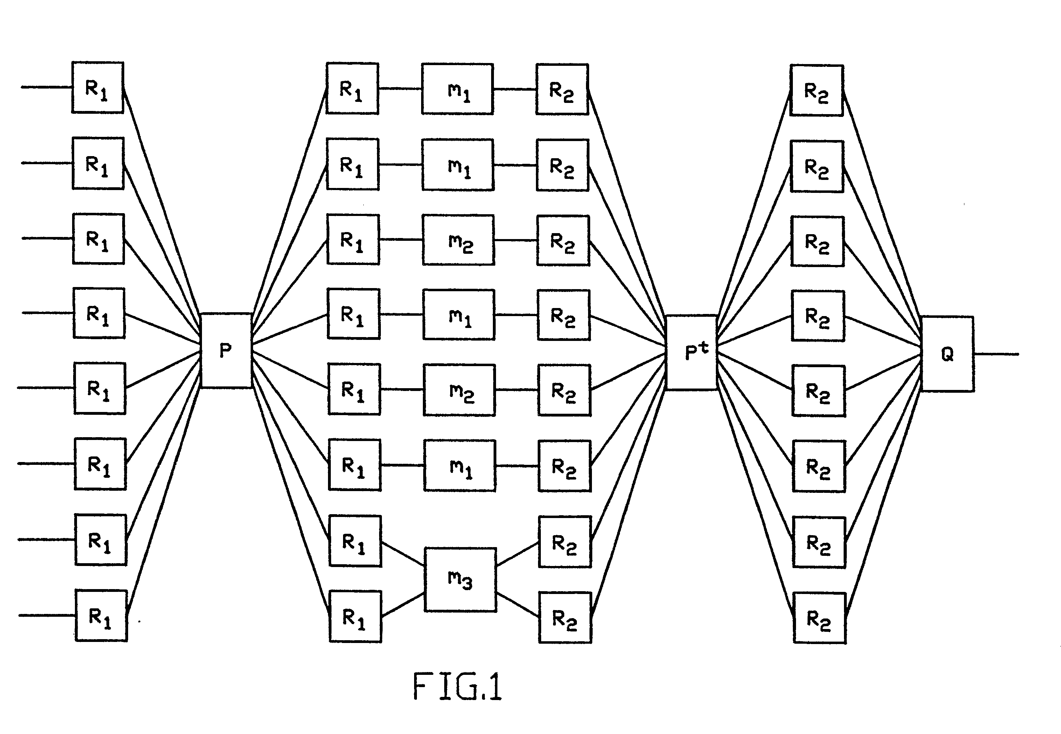

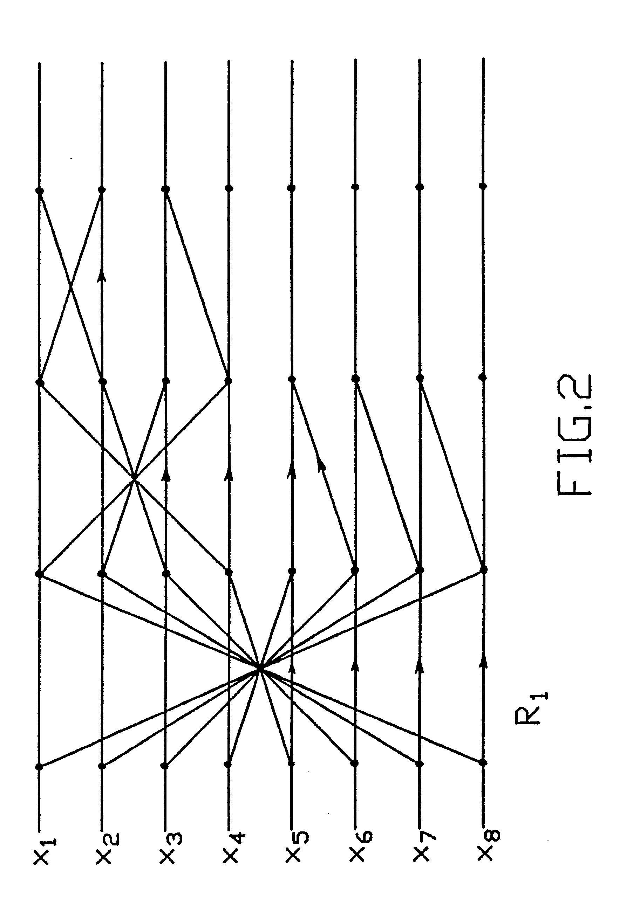

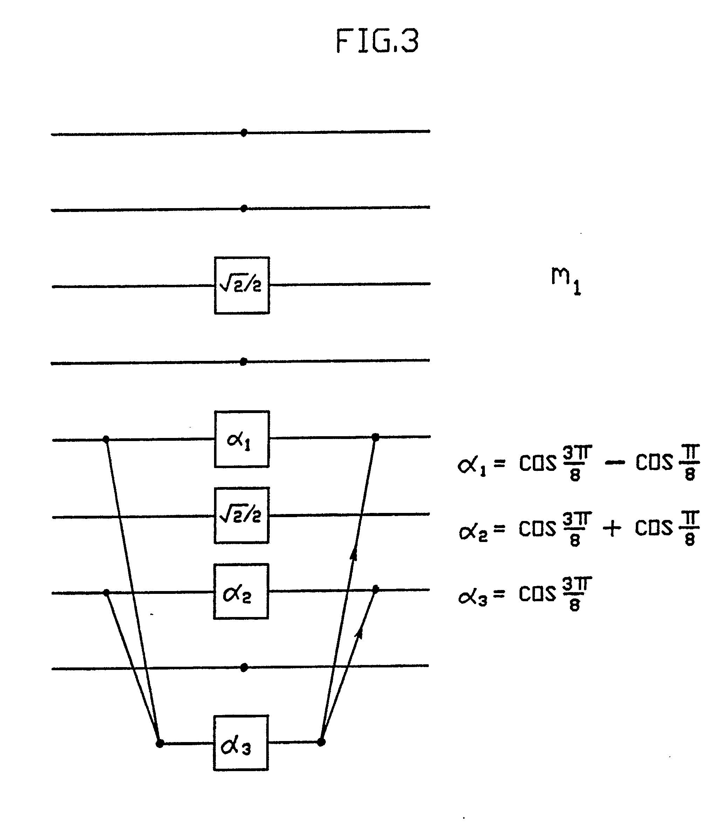

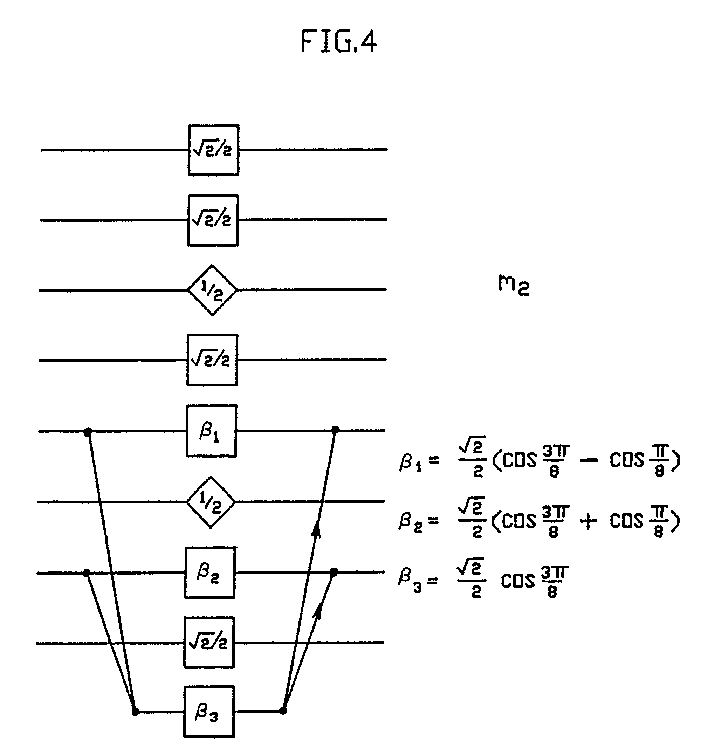

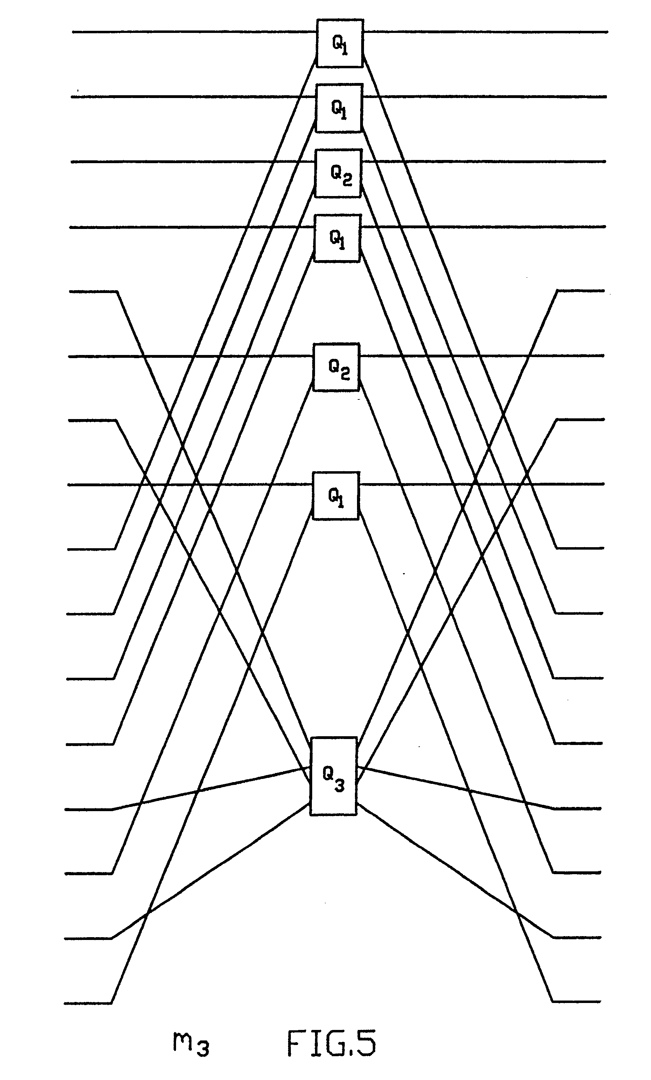

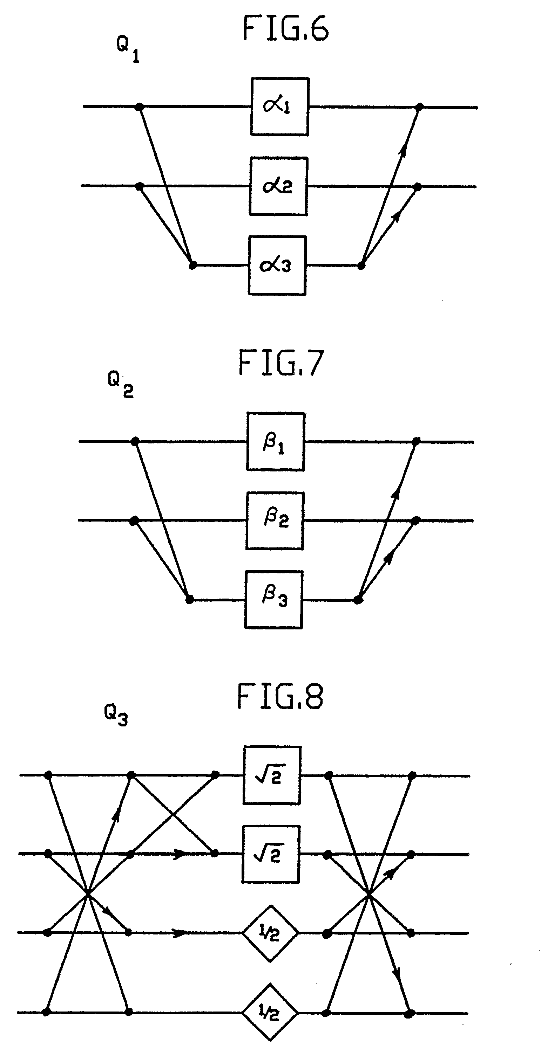

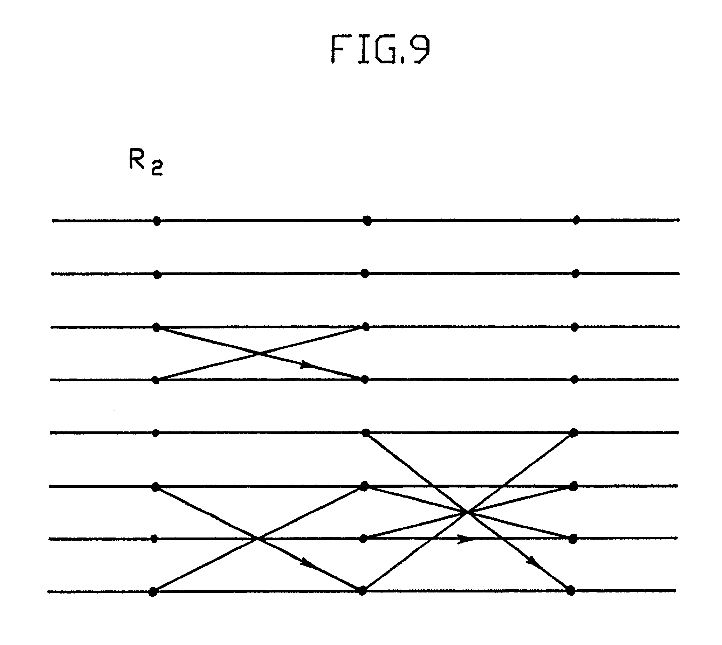

A computer program implementing a preferred 8 x 8 two-dimensional discrete-cosine-transform in an APL programming language is set forth in the attached Appendix A as the program designated "Function RUN." Figures 1 through 9 provide a flow diagram of the preferred discrete cosine transform.

D. Alternative 8 x 8 Two-Dimensional Discrete-Cosine-Transform Procedures

The two-dimensional 8 x 8 discrete-cosine transform procedure of the preceding subsection involved factoring the following diagonal matrix $D_1^{-1}$ from the discrete-cosine-transform matrix $C_8$:

Diag ($\sqrt{2}$, $4\cos\frac{\pi}{16}$, $4\cos\frac{2\pi}{16}$, $4\cos\frac{3\pi}{16}$, $4\cos\frac{4\pi}{16}$, $4\cos\frac{5\pi}{16}$, $4\cos\frac{6\pi}{16}$, $4\cos\frac{7\pi}{16}$).

Alternatively, the following diagonal matrix $D_2^{-1}$ can be factored from the discrete-cosine-transform matrix $C_8$:

$$4 \begin{bmatrix} \sqrt{2} & & & & & & & \\ & \cos\frac{\pi}{16} + \cos\frac{7\pi}{16} & & & & & & \\ & & \cos\frac{2\pi}{16} + \cos\frac{6\pi}{16} & & & & & \\ & & & \cos\frac{3\pi}{16} + \cos\frac{5\pi}{16} & & & & \\ & & & & \sqrt{2} & & & \\ & & & & & -\cos\frac{5\pi}{16} + \cos\frac{3\pi}{16} & & \\ & & & & & & -\cos\frac{2\pi}{16} + \cos\frac{6\pi}{16} & \\ & & & & & & & -\cos\frac{\pi}{16} + \cos\frac{7\pi}{16} \end{bmatrix}.$$

This leads to the following factorization

$C_8 = D_2 R_2 m R_1$,

where

$$M = \begin{bmatrix} 1 & & & & & & & \\ & 1 & & & & & & \\ & & 1 & & & & & \\ & & & \sqrt{2} & & & & \\ & & & & (\cos\frac{\pi}{8} + \cos\frac{3\pi}{8}) & -(\cos\frac{3\pi}{8} - \cos\frac{3\pi}{8}) & & \\ & & & & (\cos\frac{\pi}{8} - \cos\frac{3\pi}{8}) & (\cos\frac{\pi}{8} + \cos\frac{3\pi}{8}) & & \\ & & & & & & 1 & \\ & & & & & & & \sqrt{2} \end{bmatrix},$$

An explicit factorization of the discrete cosine transform matrix, with rows permuted so that the order is
0, 4, 6, 2, 1, 5, 7, 3
instead of the usual 0, 1, 2, 3, 4, 5, 6, 7, is given numerically below, to four significant figures.

14

$$
\begin{array}{rrrrrrrr}
1 & 1 & 1 & 1 & 1 & 1 & 1 & 1 \\
1 & -1 & -1 & 1 & 1 & -1 & -1 & 1 \\
1 & -1 & 1 & -1 & 1 & -1 & 1 & -1 \\
0 & 1 & -1 & 0 & 0 & 1 & -1 & 0 \\
1 & 0 & 1 & 0 & -1 & 0 & -1 & 0 \\
0 & -1 & 0 & 1 & 0 & 1 & 0 & -1 \\
1 & 0 & 0 & 1 & -1 & 0 & 0 & -1 \\
0 & 1 & 0 & 0 & 0 & -1 & 0 & 0
\end{array}
$$

$$
\begin{array}{rrrrrrrr}
1 & 0 & 0 & 0 & 0 & 0 & 0 & 0 \\
0 & 1 & 0 & 0 & 0 & 0 & 0 & 0 \\
0 & 0 & 1 & 0 & 0 & 0 & 0 & 0 \\
0 & 0 & 0 & 1.414 & 0 & 0 & 0 & 0 \\
0 & 0 & 0 & 0 & 1.307 & -0.5412 & 0 & 0 \\
0 & 0 & 0 & 0 & 0.5412 & 1.307 & 0 & 0 \\
0 & 0 & 0 & 0 & 0 & 0 & 1 & 0 \\
0 & 0 & 0 & 0 & 0 & 0 & 0 & 1.414
\end{array}
$$

$$
\begin{array}{rrrrrrrr}
1 & 0 & 0 & 0 & 0 & 0 & 0 & 0 \\
0 & 1 & 0 & 0 & 0 & 0 & 0 & 0 \\
0 & 0 & 1 & -1 & 0 & 0 & 0 & 0 \\
0 & 0 & 1 & 1 & 0 & 0 & 0 & 0 \\
0 & 0 & 0 & 0 & 1 & 0 & 1 & 1 \\
0 & 0 & 0 & 0 & 0 & 1 & 1 & -1 \\
0 & 0 & 0 & 0 & 1 & 0 & -1 & -1 \\
0 & 0 & 0 & 0 & 0 & 1 & -1 & 1
\end{array}
$$

$$
\begin{array}{rrrrrrrr}
0.3536 & 0 & 0 & 0 & 0 & 0 & 0 & 0 \\
0 & 0.3536 & 0 & 0 & 0 & 0 & 0 & 0 \\
0 & 0 & 0.1913 & 0 & 0 & 0 & 0 & 0 \\
0 & 0 & 0 & 0.4619 & 0 & 0 & 0 & 0 \\
0 & 0 & 0 & 0 & 0.2126 & 0 & 0 & 0 \\
0 & 0 & 0 & 0 & 0 & 0.1802 & 0 & 0 \\
0 & 0 & 0 & 0 & 0 & 0 & 0.3182 & 0 \\
0 & 0 & 0 & 0 & 0 & 0 & 0 & -0.9061
\end{array}
$$

As before, a two-dimensional, 8 x 8 discrete cosine transform procedure can be obtained by factoring a direct-product matrix as follows:

$C_8 \otimes C_8 = (D_2 \otimes D_2)\,(R_2 \otimes R_2)\,(M \otimes M),\,(R_1 \otimes R_1)$,

where the diagonal direct product $(D_2 \otimes D_2)$ can be incorporated into the quantizers. The direct product matrices $(R_2 \otimes R_2)$ and $(R_1 \otimes R_1)$ may be performed in a standard row-column fashion. The direct product matrix $(M \otimes M)$ is expanded essentially as before. The expanded result is used in a direct column-order basis.

A computer program implementing the above procedure in an APL programming language is given in attached Appendix B.

The second procedure of the present subsection D has advantages over the first procedure of the subsection C above in that six multiplications by 1/2 are converted to four multiplications by 2. Both procedures have the same number of additions and subtractions and the same number of non-trivial multiplies. The first procedure generally has advantages in dynamic range and numerical stability.

If desired, the first and second procedures can be combined utilizing scalings for rows (2,6) of one procedure and those for rows (1,5,7,3) of the other procedure. For example, the following diagonal matrix $D_3$ can be factored from the eight-point discrete-cosine-transform matrix $C_8$.

15

$$
\begin{bmatrix}
\sqrt{2} & & & & & & & \\
& \cos(\pi/16) & & & & & & \\
& & \cos(2\pi/16) + \cos(6\pi/16) & & & & & \\
& & & \cos(3\pi/16) & & & & \\
& & & & \sqrt{2} & & & \\
& & & & & \cos(5\pi/16) & & \\
& & & & & & -\cos(2\pi/16) + \cos(6\pi/16) & \\
& & & & & & & \cos(7\pi/16)
\end{bmatrix} ,
$$

In general, the diagonal factorization matrix D can be changed by permuting the diagonal entries as follows:

(i) $2 \longleftrightarrow 6$

(ii) $1 \longleftrightarrow 7$ and $3 \longleftrightarrow 5$

(iii) $2 \longleftrightarrow 6$ and $1 \longleftrightarrow 7$ and $3 \longleftrightarrow 5$.

Such variations are especially helpful because, when coupled with different quantizer matrices, some will offer better numerical stability than others. For example, consider the following quantizer matrix A = $(A_{ij})$:

$$
A = \begin{bmatrix}
16 & 11 & 10 & 16 & 24 & 40 & 51 & 61 \\
12 & 12 & 14 & 19 & 26 & 58 & 60 & 65 \\
14 & 13 & 16 & 24 & 40 & 57 & 69 & 56 \\
14 & 17 & 22 & 29 & 51 & 87 & 80 & 62 \\
18 & 22 & 37 & 56 & 68 & 109 & 103 & 77 \\
24 & 35 & 55 & 64 & 81 & 104 & 113 & 92 \\
49 & 64 & 78 & 87 & 103 & 121 & 120 & 101 \\
72 & 92 & 95 & 98 & 112 & 100 & 103 & 99
\end{bmatrix} .
$$

The matrix A has been proposed to the Joint Photographic Experts Group ("JPEG") of the International Standards Organization, IEC, as a default quantizing matrix: Document No. JPEG-5 (previously 4800) ISO/IEC JTC1/SC2/W68/JPEG.

E. Inverse 8 x 8 Two-Dimensional Discrete Cosine Transform

The discrete cosine transform matrix C is orthogonal; that is, $C^{-1} = C^T$ Therefore, given a factorization, $C = D R_2 M R_1$, the inverse process can be written:

$C^{-1} = R_1{}^T m^t R_2{}^t D$.

A dequantization matrix is DAD, which can be used to multiply the coded coefficients on an element-by-element basis.

$R_1{}^T$ and $R_2{}^T$ are addition /subtraction operators. The transposed matrix $M^T$ has essentially the same structure as the matrix M. Also, the direct product of the transposed matrices $M^T \otimes M^T$ equals the transpose of the direct product matrix $(M \otimes M)^T$ . Consequently, an inverse discrete cosine transform procedure of the type disclosed for the discrete cosine transform can be obtained.

Alternatively, the inverse discrete cosine transform can be written $C^{-1} = R_1{}^{-1}, M^{-1} R_2{}^{-1} D^{-1}$.

The dequantizer matrix is $D^{-1} A D^1$ which may offer better stability, as is the case with the default quantizer matrix of the Joint Photographic Experts Group set forth above.

For the two-dimensional 8 x 8 case, the inverse discrete cosine transform of the preceding paragraph can be expanded numerically in matrix form to four significant figure as follows:

$R_1{}^{-1} = X_1{}^{-1} X_2{}^{-1} X_3{}^{-1}$, where

$$X_1{}^{-1} = \begin{pmatrix} 1 & 0 & 0 & 0 & 0 & 0 & 0 & 1 \\ 0 & 1 & 0 & 0 & 0 & 0 & 1 & 0 \\ 0 & 0 & 1 & 0 & 0 & 1 & 0 & 0 \\ 0 & 0 & 0 & 1 & 1 & 0 & 0 & 0 \\ 0 & 0 & 0 & 1 & -1 & 0 & 0 & 0 \\ 0 & 0 & 1 & 0 & 0 & -1 & 0 & 0 \\ 0 & 1 & 0 & 0 & 0 & 0 & -1 & 0 \\ 1 & 0 & 0 & 0 & 0 & 0 & 0 & -1 \end{pmatrix}$$

$$X_2{}^{-1} = \begin{pmatrix} 1 & 0 & 0 & 1 & 0 & 0 & 0 & 0 \\ 0 & 1 & 1 & 0 & 0 & 0 & 0 & 0 \\ 0 & 1 & -1 & 0 & 0 & 0 & 0 & 0 \\ 1 & 0 & 0 & -1 & 0 & 0 & 0 & 0 \\ 0 & 0 & 0 & 0 & -1 & -1 & 1 & -1 \\ 0 & 0 & 0 & 0 & 0 & 1 & -1 & 1 \\ 0 & 0 & 0 & 0 & 0 & 0 & 1 & -1 \\ 0 & 0 & 0 & 0 & 0 & 0 & 0 & 1 \end{pmatrix}$$

$$X_3{}^{-1} = \begin{pmatrix} 1 & 1 & 0 & 0 & 0 & 0 & 0 & 0 \\ 1 & -1 & 0 & 0 & 0 & 0 & 0 & 0 \\ 0 & 0 & 1 & -1 & 0 & 0 & 0 & 0 \\ 0 & 0 & 0 & 1 & 0 & 0 & 0 & 0 \\ 0 & 0 & 0 & 0 & 1 & 0 & 0 & 0 \\ 0 & 0 & 0 & 0 & 0 & 1 & 0 & 0 \\ 0 & 0 & 0 & 0 & 0 & 0 & 1 & 0 \\ 0 & 0 & 0 & 0 & 0 & 0 & 0 & 1 \end{pmatrix}$$

$$M^{-1} = \begin{pmatrix} 1 & 0 & 0 & 0 & 0 & 0 & 0 & 0 \\ 0 & 1 & 0 & 0 & 0 & 0 & 0 & 0 \\ 0 & 0 & 1.4142 & 0 & 0 & 0 & 0 & 0 \\ 0 & 0 & 0 & 1 & 0 & 0 & 0 & 0 \\ 0 & 0 & 0 & 0 & -1.8478 & 0 & -0.76537 & 0 \\ 0 & 0 & 0 & 0 & 0 & 1.4142 & 0 & 0 \\ 0 & 0 & 0 & 0 & -0.76537 & 0 & 1.8478 & 0 \\ 0 & 0 & 0 & 0 & 0 & 0 & 0 & 1 \end{pmatrix}$$

$R_2 = Y_2{}^{-1} Y_3{}^{-1} P$, where

$$Y_2{}^{-1} = \begin{pmatrix} 1 & 0 & 0 & 0 & 0 & 0 & 0 \\ 0 & 1 & 0 & 0 & 0 & 0 & 0 \\ 0 & 0 & 1 & -1 & 0 & 0 & 0 \\ 0 & 0 & 1 & 1 & 0 & 0 & 0 \\ 0 & 0 & 0 & 0 & 1 & 0 & 0 \\ 0 & 0 & 0 & 0 & 0 & 1 & 0 & -1 \\ 0 & 0 & 0 & 0 & 0 & 0 & 1 & 0 \\ 0 & 0 & 0 & 0 & 0 & 1 & 0 & 1 \end{pmatrix}$$

$$Y_3^{-1} = \begin{pmatrix} 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 0 & 0 & 0 & 1 & 0 & 0 & 0 & 0 \\ 0 & 0 & 0 & 0 & 1 & 0 & 0 & -1 \\ 0 & 0 & 0 & 0 & 0 & 1 & 1 & 0 \\ 0 & 0 & 0 & 0 & 0 & 1 & -1 & 0 \\ 0 & 0 & 0 & 0 & 1 & 0 & 0 & 1 \end{pmatrix}$$

$$P = \begin{pmatrix} 1 & 0 & 0 & 0 & 0 & 0 & 0 & 0 \\ 0 & 0 & 0 & 0 & 1 & 0 & 0 & 0 \\ 0 & 0 & 1 & 0 & 0 & 0 & 0 & 0 \\ 0 & 0 & 0 & 0 & 0 & 0 & 1 & 0 \\ 0 & 0 & 0 & 0 & 0 & 1 & 0 & 0 \\ 0 & 1 & 0 & 0 & 0 & 0 & 0 & 0 \\ 0 & 0 & 0 & 0 & 0 & 0 & 0 & 1 \\ 0 & 0 & 0 & 1 & 0 & 0 & 0 & 0 \end{pmatrix}$$

and

$$D^{-1} = \begin{pmatrix} 0.35355 & 0 & 0 & 0 & 0 & 0 & 0 & 0 \\ 0 & 0.49039 & 0 & 0 & 0 & 0 & 0 & 0 \\ 0 & 0 & 0.46194 & 0 & 0 & 0 & 0 & 0 \\ 0 & 0 & 0 & 0.41573 & 0 & 0 & 0 & 0 \\ 0 & 0 & 0 & 0 & 0.35355 & 0 & 0 & 0 \\ 0 & 0 & 0 & 0 & 0 & 0.27779 & 0 & 0 \\ 0 & 0 & 0 & 0 & 0 & 0 & 0.19134 & 0 \\ 0 & 0 & 0 & 0 & 0 & 0 & 0 & 0.097545 \end{pmatrix}$$

A computer program implememtomg the 8 x 8 two-dimensional inverse discrete cosine transform procedure in an APL programming language is set forth in the attached Appendix A as the program designated "Function RUNINV."

Let the diagonal matrix to be absorbed in the quantizer be labeled

$$D = \begin{bmatrix} d_0 & & & & \\ & d_1 & & & \\ & & \ddots & & \\ & & & \ddots & \\ & & & & d_7 \end{bmatrix}$$

Then the scaled-transform compensated modified quantizing matrix is $D^{-1} A D^{-1}$ whose (i,j) entry is

$$\frac{A_{ij}}{d_i \, d_j}$$

The first procedure disclosed has

$$D_1 = \begin{pmatrix} 0.3536 & 0 & 0 & 0 & 0 & 0 & 0 & 0 \\ 0 & 0.2549 & 0 & 0 & 0 & 0 & 0 & 0 \\ 0 & 0 & 0.2706 & 0 & 0 & 0 & 0 & 0 \\ 0 & 0 & 0 & 0.3007 & 0 & 0 & 0 & 0 \\ 0 & 0 & 0 & 0 & 0.3536 & 0 & 0 & 0 \\ 0 & 0 & 0 & 0 & 0 & 0.45 & 0 & 0 \\ 0 & 0 & 0 & 0 & 0 & 0 & 0.6533 & 0 \\ 0 & 0 & 0 & 0 & 0 & 0 & 0 & 1.281 \end{pmatrix}$$

$$D_1^{-1} A D_1^{-1} = \begin{matrix} 128 & 122 & 105 & 151 & 192 & 251 & 221 & 135 \\ 133 & 185 & 203 & 248 & 289 & 506 & 360 & 199 \\ 146 & 188 & 219 & 295 & 418 & 468 & 390 & 161 \\ 132 & 222 & 270 & 321 & 480 & 643 & 407 & 161 \\ 144 & 244 & 387 & 527 & 544 & 685 & 446 & 170 \\ 151 & 305 & 452 & 473 & 509 & 514 & 384 & 160 \\ 212 & 384 & 441 & 443 & 446 & 412 & 281 & 121 \\ 159 & 282 & 274 & 254 & 247 & 173 & 123 & 60 \end{matrix}$$

and

$$D_2^{-1} A D_2^{-1} = \begin{matrix} 128 & 98 & 61 & 251 & 192 & 125 & 754 & 812 \\ 107 & 119 & 95 & 331 & 231 & 201 & 985 & 961 \\ 86 & 88 & 75 & 288 & 245 & 136 & 781 & 570 \\ 220 & 296 & 264 & 893 & 800 & 533 & 2320 & 1618 \\ 144 & 196 & 227 & 879 & 544 & 340 & 1523 & 1024 \\ 75 & 121 & 131 & 392 & 253 & 127 & 652 & 478 \\ 724 & 1051 & 882 & 2523 & 1523 & 698 & 3278 & 2483 \\ 958 & 1360 & 967 & 2557 & 1490 & 519 & 2532 & 2190 \end{matrix}$$

The first scaled-transform-compensated quantizer matrix exhibits a significantly better dynamic range than the second. The smallest number in the first scaled-transform-compensated quantized matrix is 60, located in the lower right corner. The number 60 is sufficiently small relative to the remaining entries in the matrix that it is usually negligible. Neglecting the lowest value 60, the dynamic range of the first modified quantized matrix is no greater than 8, or, in binary, 3 bits.

Quantization is carried out element by element by dividing elements of the results of the scaled two-dimensional discrete cosine transform with corresponding elements of the scaled-transform-compensated quantizer matrix. Substantial savings in time can be obtained by testing the relative magnitudes of the transformed data point and the corresponding element of the quantizer matrix prior to division to identify these pairs after quantization which would yield 0 and ±1.

F. Factorization of the 16-Point Discrete Cosine Transform

A preferred factorization for the 16-point discrete-cosine-transform matrix $C_{16}$ is set forth in the following subsection.

Let $C_{16}$ denote the 16-point discrete-cosine-transform matrix, arranged so that the even-indexed rows precede the odd-indexed rows. Let $I_8$ denote the 8x8 identity matrix and $J_8$ denote an 8x8 matrix obtained from $I_8$ by reversing the order of the columns of $I_8$.

Consider the matrix product:

$$1/2 \ C_{16} \begin{pmatrix} I_8 & J_8 \\ I_8 & -J_8 \end{pmatrix} = \begin{pmatrix} F_1 & \phi \\ \phi & F_2 \end{pmatrix}.$$

Numerically, to four significant figures, the matrices $F_1$ and $F_2$ are given by:

$$F_1 = \begin{pmatrix} 0.25 & 0.25 & 0.25 & 0.25 & 0.25 & 0.25 & 0.25 & 0.25 \\ 0.3468 & 0.294 & 0.1964 & 0.06897 & -0.06897 & -0.1964 & -0.294 & -0.3468 \\ 0.3266 & 0.1353 & -0.1353 & -0.3266 & -0.3266 & -0.1353 & 0.1353 & 0.3266 \\ 0.294 & -0.06897 & -0.3468 & -0.1964 & 0.1964 & 0.3468 & 0.06897 & -0.294 \\ 0.25 & -0.25 & -0.25 & 0.25 & 0.25 & -0.25 & -0.25 & 0.25 \\ 0.1964 & -0.3468 & 0.06897 & 0.294 & -0.294 & -0.06897 & 0.3468 & -0.1964 \\ 0.1353 & -0.3266 & 0.3266 & -0.1353 & -0.1353 & 0.3266 & -0.3266 & 0.1353 \\ 0.06897 & -0.1964 & 0.294 & -0.3468 & 0.3468 & -0.294 & 0.1964 & -0.06897 \end{pmatrix}$$

and

$$F_2 = \begin{pmatrix} 0.3519 & 0.3383 & 0.3118 & 0.2733 & 0.2243 & 0.1667 & 0.1026 & 0.03465 \\ 0.3383 & 0.2243 & 0.03465 & -0.1667 & -0.3118 & -0.3519 & -0.2733 & -0.1026 \\ 0.3118 & 0.03465 & -0.2733 & -0.3383 & -0.1026 & 0.2243 & 0.3519 & 0.1667 \\ 0.2733 & -0.1667 & -0.3383 & 0.03465 & 0.3519 & 0.1026 & -0.3118 & -0.2243 \\ 0.2243 & -0.3118 & -0.1026 & 0.3519 & -0.03465 & -0.3383 & 0.1667 & 0.2733 \\ 0.1667 & -0.3519 & 0.2243 & 0.1026 & -0.3383 & 0.2733 & 0.03465 & -0.3118 \\ 0.1026 & -0.2733 & 0.3519 & -0.3118 & 0.1667 & 0.03465 & -0.2243 & 0.3383 \\ 0.03465 & -0.1026 & 0.1667 & -0.2243 & 0.2733 & -0.3118 & 0.3383 & -0.3519 \end{pmatrix}$$

It can be seen that $F_1 = (\sqrt{2})^{-1} C_8$, where $C_8$ is the 8-point discrete-cosine-transform matrix.

A factorization of the 8-point discrete-cosine-transform matrix $C_8$ was specified above. The matrix $F_1$ can be factored in essentially the same way, with the $(\sqrt{2})^{-1}$ term combined with the diagonal matrix. Consider now the matrix $F_2$. First, define an 8x8 permutation matrix P by:

$$P = \begin{pmatrix} 1 & 0 & 0 & 0 & 0 & 0 & 0 & 0 \\ 0 & 0 & 1 & 0 & 0 & 0 & 0 & 0 \\ 0 & 0 & 0 & -1 & 0 & 0 & 0 & 0 \\ 0 & 1 & 0 & 0 & 0 & 0 & 0 & 0 \\ 0 & 0 & 0 & 0 & 0 & 0 & 0 & 1 \\ 0 & 0 & 0 & 0 & 0 & 1 & 0 & 0 \\ 0 & 0 & 0 & 0 & 1 & 0 & 0 & 0 \\ 0 & 0 & 0 & 0 & 0 & 0 & -1 & 0 \end{pmatrix}$$

Define an 8x8 matrix $G_2$ by

20

$$G_2 = PF_2P^{-1} =$$

$$
\begin{pmatrix}
0.7037 & 0.6236 & -0.5466 & 0.6767 & 0.06931 & 0.3333 & 0.4486 & -0.2053 \\
0.6236 & -0.5466 & 0.6767 & 0.06931 & 0.3333 & 0.4486 & -0.2053 & -0.7037 \\
-0.5466 & 0.6767 & 0.06931 & 0.3333 & 0.4486 & -0.2053 & -0.7037 & -0.6236 \\
0.6767 & 0.06931 & 0.3333 & 0.4486 & -0.2053 & -0.7037 & -0.6236 & 0.5466 \\
0.06931 & 0.3333 & 0.4486 & -0.2053 & -0.7037 & -0.6236 & 0.5466 & -0.6767 \\
0.3333 & 0.4486 & -0.2053 & -0.7037 & -0.6236 & 0.5466 & -0.6767 & -0.06931 \\
0.4486 & -0.2053 & -0.7037 & -0.6236 & 0.5466 & -0.6767 & -0.06931 & -0.3333 \\
-0.2053 & -0.7037 & -0.6236 & 0.5466 & -0.6767 & -0.06931 & -0.3333 & -0.4486
\end{pmatrix}
$$

The matrix $G_2$ is of a "polynomial" form.

Now define an 8x8 diagonal matrix D by taking the (i,i) term of D to be the (i,1) term of $G_2$.

$$
D =
\begin{pmatrix}
0.7037 & 0 & 0 & 0 & 0 & 0 & 0 & 0 \\
0 & 0.6236 & 0 & 0 & 0 & 0 & 0 & 0 \\
0 & 0 & -0.5466 & 0 & 0 & 0 & 0 & 0 \\
0 & 0 & 0 & 0.6767 & 0 & 0 & 0 & 0 \\
0 & 0 & 0 & 0 & 0.06931 & 0 & 0 & 0 \\
0 & 0 & 0 & 0 & 0 & 0.3333 & 0 & 0 \\
0 & 0 & 0 & 0 & 0 & 0 & 0.4486 & 0 \\
0 & 0 & 0 & 0 & 0 & 0 & 0 & -0.2053
\end{pmatrix}
$$

Define two 8x8 addition/subtraction matrices $R_1$ and $R_2$ as follows:

$$R_1 = \begin{pmatrix} 1 & -1 & 1 & 0 & 1 & 0 & 0 & 0 \\ 1 & 1 & 0 & 1 & 0 & 1 & 0 & 0 \\ 1 & -1 & -1 & 0 & 0 & 0 & 1 & 0 \\ 1 & 1 & 0 & -1 & 0 & 0 & 0 & 1 \\ 1 & -1 & 1 & 0 & -1 & 0 & 0 & 0 \\ 1 & 1 & 0 & 1 & 0 & -1 & 0 & 0 \\ 1 & -1 & -1 & 0 & 0 & 0 & -1 & 0 \\ 1 & 1 & 0 & -1 & 0 & 0 & 0 & -1 \end{pmatrix}$$

and

$$R_2 = \begin{pmatrix} 1 & 0 & 0 & 0 & 0 & 0 & 0 & 0 \\ 0 & 0 & 1 & 0 & 0 & 0 & -1 & 0 \\ 0 & 1 & 0 & 1 & 0 & 0 & 0 & 0 \\ 0 & 0 & 0 & 0 & 0 & 1 & 0 & -1 \\ 1 & 0 & 0 & 1 & 0 & 0 & 0 & 0 \\ 0 & 0 & 0 & 0 & 0 & 1 & 1 & 0 \\ 0 & 0 & 0 & 0 & 1 & 0 & 0 & -1 \\ 0 & 1 & -1 & 0 & 0 & 0 & 0 & 0 \end{pmatrix}$$

Define an 8x8 matrix M by:

$M = R_1^{-1} D G_2 R_2^{-1}$.

It can be verified by direct calculation that M is a direct sum of four matrices, each of a "polynomial" form.

To four significant figures, the matrix M is given by:

$$M = \begin{pmatrix} 0.25 & 0 & 0 & 0 & 0 & 0 & 0 & 0 \\ 0 & 0.1768 & 0 & 0 & 0 & 0 & 0 & 0 \\ 0 & 0 & 0.231 & 0.09567 & 0 & 0 & 0 & 0 \\ 0 & 0 & -0.09567 & 0.231 & 0 & 0 & 0 & 0 \\ 0 & 0 & 0 & 0 & 0.2452 & 0.1389 & 0.04877 & 0.2079 \\ 0 & 0 & 0 & 0 & 0.1389 & 0.04877 & 0.2079 & -0.2452 \\ 0 & 0 & 0 & 0 & 0.04877 & 0.2079 & -0.2452 & -0.1389 \\ 0 & 0 & 0 & 0 & 0.2079 & -0.2452 & -0.1389 & -0.04877 \end{pmatrix}$$

The expressions defining the matrix M in terms of the matrix G2 and G2 in terms of the matrix F$_2$ can be inverted to yield an expression for the matrix F$_2$ as a matrix product of the form $D' R'_1 M R'_2$, where $D'$ is a diagonal matrix, $R'_1$ and $R'_2$ are addition/subtraction matrices, and M is a direct sum of matrices of a polynomial form. It will be recalled that a similar factorization exists for the 8-point discrete-cosine-transform matrix C$_8$, which is written here as $C_8 = D_8 R_1^{(8)} M_8 R_2^{(8)}$.

Thus, the 16x16 discrete-cosine-transform-matrix C$_{16}$ can be factored as follows:

$C_{16} = D^{(16)} R_1^{(16)} M_{16} R_2^{(16)}$,

where the matrix $D^{(16)}$ is diagonal, the matrices $R_1^{(16)}$ and $R_2^{(16)}$ are addition/subtraction matrices, and M$_{16}$ is a direct sum of matrices, each of which is of a polynomial form.

To summarize:

$$(1/2) \ P \ C_{16} \ P^{-1} \begin{pmatrix} I_8 & J_8 \\ I_8 & -J_8 \end{pmatrix} = \begin{pmatrix} F_1 & \phi \\ \phi & F_2 \end{pmatrix} = \begin{pmatrix} \sqrt{2}I_8 & \phi \\ \phi & I_8 \end{pmatrix} \begin{pmatrix} C_8 & \phi \\ \phi & F_2 \end{pmatrix}$$

$$= \begin{pmatrix} \sqrt{2}I_8 & \phi \\ \phi & I_8 \end{pmatrix} \begin{pmatrix} D_8 \ R_1^{(8)} \ M_8 R_2^{(8)} & \phi \\ \phi & DR_1 \ \widetilde{M} \ R_2 \end{pmatrix}$$

$$= \ D \ R_1' \ M_{16} \ R_2',$$

where $\quad D' = \begin{pmatrix} \sqrt{2}D_8 & \phi \\ \phi & D \end{pmatrix}$ is diagonal,

$$R_1' = \begin{pmatrix} R_1^{(8)} & \phi \\ \phi & R_1 \end{pmatrix},$$

$$R_2' = \begin{pmatrix} R_2^{(8)} & \phi \\ \phi & R_2 \end{pmatrix},$$

and $\quad M_{16} = \begin{pmatrix} M & \phi \\ \phi & \widetilde{M} \end{pmatrix}$

$$C_{16} = (P^{-1}D'P) \ (P^{-1}R_1^1) \ M(2R^1 \ (\begin{smallmatrix} J \\ J \end{smallmatrix})^{-1}) = D^{(16)}R_1^{(16)} \ M_{16} \ R_2^{(16)}$$

## G. Discrete Cosine Transform For Nonsquare Data Array

A preferred two-dimensional discrete-cosine-transform procedure of the invention for a non-square, two-dimensional 8x16 array of data is set forth in the following subsection. The 8 x 16 discrete-cosine-transform procedure makes use of the factorizations of the 16-point discrete-cosine-transform matrix $C_{16}$ and the 8-point discrete-cosine-transform matrix $C_8$ set forth above.

As explained above, the 8 and 16-point discrete-cosine-transform matrices $C_8$ and $C_{16}$ can be factored as follows:
$C_8 = D^{(8)} \ R_1^{(8)} \ M_8 \ R_2^{(8)}$, and
$C_{16} = D^{(16)} \ R_1^{(16)} \ M_{16} \ R_2^{(16)}$.

For an 8x16 array of data, the direct product matrix $C_8 \otimes C_{16}$ is formed:

$$C_8 \otimes C_{16}$$
$$(D^{(8)} \otimes D^{(16)}) \ (R_1^{(8)} \otimes R_1^{(16)}) \ (M_8 \otimes M_{16})$$
$$(R_2^{(8)} \otimes R_2^{(16)}).$$

The direct product matrix $(D^{(8)} \otimes D^{(16)})$ is diagonal and its terms can be absorbed in the quantization to form a scaled-transform-compensated quantization matrix.

The additions and subtractions specified by $(R_1^{(8)} \otimes R_1^{(16)})$ and $R_2^{(8)} \otimes R_2^{(16)})$ can be done in a row-column fashion.

The product by the direct-product matrix $(M_8 \otimes M_{16})$ is done on a direct column-order basis. The direct product is expanded and expressed as a direct sum of smaller matrices of a polynomial type.

To determine the number of nontrivial multiplications needed, the direct product is written

$$M_8 \otimes M_{16} = M_8 \otimes \begin{pmatrix} M_8 & \\ & \tilde{M} \end{pmatrix}$$

$$= (M_8 \otimes M_8) \oplus (M_8 \otimes \tilde{M}).$$

The $M_8 \otimes M_8$ part is the same as the multiplication part of the two-dimensional 8x8 discrete cosine transform, which, as noted above, entails 54 nontrivial multiplications.

Next, the direct product

$$M_8 \otimes \tilde{M}$$

can be written

$$M_8 \otimes \tilde{M} = \begin{pmatrix} 1 & & & & & \\ & 1 & & & & \\ & & 1 & & & \\ & & & \sqrt{2} & & \\ & & & & \sqrt{2} & \\ & & & & \gamma(2) & \gamma(6) \\ & & & & -\gamma(6) & \gamma(2) \end{pmatrix} \otimes \tilde{M} = \begin{pmatrix} \tilde{M} & & & & \\ & \tilde{M} & & & \\ & & \tilde{M} & & \\ & & & \tilde{M} & \\ & & & & \sqrt{2}\tilde{M} & \\ & & & & & \sqrt{2}\tilde{M} \\ & & & & & & B \otimes \tilde{M} \end{pmatrix}$$

where $\gamma(j) = \cos(\pi j/16)$

$$\text{and } B = \begin{pmatrix} \gamma(2) & \gamma(6) \\ -\gamma(6) & \gamma(2) \end{pmatrix}$$

The number of nontrivial multiplications for computing a product by

$$\tilde{M}$$

depending on how one computes the 4x4 block on the bottom right, denoted H.

The product by

$$H$$

can be done with as few as seven nontrivial multiplications. However, a large number of addition and subtractions are required in this case, so in general it is not most preferred. Notice that the block H is 1/2 times a 4x4 block of the first four columns of the odd rows of the eight-point discrete cosine transform. Thus the block H can also be written:

$$H = \tilde{D} \begin{pmatrix} \frac{1}{\sqrt{2}} & & \\ & \gamma(2) & \gamma(6) \\ & -\gamma(6) & \gamma(2) \end{pmatrix}.$$

The product by H can be computed with eight nontrivial multiplications, 4 for

$$\tilde{D},$$

one for $\sqrt{2}$, and 3 for

$$\begin{pmatrix} \gamma(2) & \gamma(6) \\ -\gamma(6) & \gamma(2) \end{pmatrix},$$

This second approach will be used for the count of nontrivial multiplications. However, for this second approach certain of the multiplications are nested, which is not acceptable for certain applications.

The product by H can also be computed with nine nontrivial multiplications in which the multiplications are not nested and for which only a few additions and subtractions are required relative to the first approach.

Using the second approach for computing the product by the block H, there are $4 \times 12 = 48$ nontrivial multiplications for two products by

$$\tilde{M};$$

and
$2 \times 12 = 24$ nontrivial multiplications for two products by

$$\sqrt{2}\ \tilde{M}.$$

Next, consider

$$B \otimes H = \begin{pmatrix} \frac{1}{4}B & & \\ & \frac{\sqrt{2}}{8}B & \\ & & B \otimes B \\ & & & B \otimes H \end{pmatrix}$$

There exist addition/subtraction matrices $R_a$ and $R_b$ such that
$B \otimes B = R_a\, (^B{}_B)\, R_a^{-1}$ and
$B \otimes H = R_b\, (^H{}_H)\, R_b^{-1}$.
This result follows from the theory of algebra: the tensor product of fields is a direct sum of fields; see Adrian Albert, Structure of Algebras. Thus, computing B

$$M$$

times a vector involves

3 nontrivial multiplications for $\frac{1}{4}$ B,

3 nontrivial multiplications for $\sqrt{2}|8$ B,

6 nontrivial multiplications for B $\otimes$ B,

16 nontrivial multiplications for B $\otimes$ H.

The total nontrivial multiplication count for computing a product by $M_8 \otimes M_1$ is 100 + 54 = 154.


E. The Two-Dimensional 16x16 Discrete Cosine Transform

For a two-dimensional discrete cosine transform for 16x16 two-dimensional array of data points, recall from above that $C_{16} = D^{(16)} R^{(16)} M_{16} R_{21}^{(16)}$ The direct product $C_{16} \otimes C_{16}$ can be formed and expanded as above:

$C_{16} \otimes C_{16} = (D^{(16)} \otimes D^{(16)}) (R_1^{(16)} \otimes R1^{(16)} (M_{16} \otimes M_{16}) (R_2^{(16)} \otimes R2^{(16)})$.

It is not intended to limit the present invention to the specific embodiments described above. It is recognized that changes may be made in the circuits and processes specifically described herein without departing from the scope and teaching of the instant invention, and it is intended to encompass all other embodiments, alternatives, and modifications consistent with the invention.


**Claims**

1. An array-processing method comprising the steps of:

(a) sampling a physical variable to obtain an input data array of real numeric data points representative of the physical variable, the input data array having a dimensionality of m, where m is an integer greater than or equal to two;

(b) performing a scaled m-dimensional discrete cosine transform on the input data array, the scaled m-dimensional discrete cosine transform including the following operations in sequence,

(b.1) performing pre-multiplication-stage addition/subtraction operations on the input data array to obtain pre-multiplication-stage output data, the pre-multiplication-stage addition/subtraction operations involving at most only trivial multiplication operations, the pre-multiplication stage addition/subtraction operations being carried out on a row-column basis;

(b.2) performing multiplication-stage multiplication/addition/subtraction operations on pre-multiplication-stage output data to obtain multiplication-stage output data, the multiplication-stage multiplication/addition/subtraction operations being carried out on a direct row-ordered or column-ordered basis; and

(b.3) performing post-multiplication stage addition/subtraction operations on multiplication-stage output data to obtain post-multiplication-stage output data, the post-multiplication-stage addition/subtraction operations involving at most only trivial multiplication operations, the post-multiplication stage addition/subtraction operations being carried out on a row-column basis;

(c) quantizing the post-multiplication-stage output data to obtain quantized transformed output data, the quantizing of the post-multiplication- stage output data being carried out element-by-element in accordance with corresponding elements of a transform-scaling-compensated quantization matrix, each element of the transform-scaling-compensated quantization matrix being multiplied by a corresponding transform-scaling-compensation factor, each transform-scaling-compensation factor corresponding to a reciprocal of a diagonal element of a diagonal-matrix factor associated with the scaled m-dimensional discrete cosine transform; and

(d) storing the quantized transformed output data.

2. The array-processing method of claim 1 in which m equals 2, so that the input data array obtained in step (a) has a dimensionality of two and the scaled discrete cosine transform performed in step (b) is a scaled two-dimensional discrete cosine transform.

3. The array-processing method of claim 2 in which the two-dimensional input data array is an 8 x 8 array and the scaled two-dimensional discrete cosine transform is an 8 x 8 scaled two-dimensional discrete cosine transform.

4. The array-processing method of claim 3 in which the diagonal-matrix factor associated with the scaled two-dimensional 8 x 8 discrete cosine transform is a direct product of an inverse of the following 8 x 8 diagonal matrix with itself:

Diag ($\sqrt{2}$, 4 $\cos\frac{\pi}{16}$, 4 $\cos\frac{2\pi}{16}$, 4 $\cos\frac{3\pi}{16}$, 4 $\cos\frac{4\pi}{16}$, 4 $\cos\frac{5\pi}{16}$, 4 $\cos\frac{6\pi}{16}$, 4 $\cos\frac{7\pi}{16}$ ).

5. The array-processing method of claim 3 or claim 4 in which the diagonal-matrix factor associated with the scaled two-dimensional 8 x 8 discrete cosine transform is a direct product of an inverse of the following 8 x 8 diagonal matrix with itself:

4 Diag ( $\sqrt{2}$, $\cos\frac{\pi}{16}$ + $\cos\frac{7\pi}{16}$, $\cos\frac{2\pi}{16}$ + $\cos\frac{6\pi}{16}$, $\cos\frac{3\pi}{16}$, + $\cos\frac{5\pi}{16}$, $\sqrt{2}$, - $\cos\frac{5\pi}{16}$ + $\cos\frac{3\pi}{16}$

, - $\cos\frac{2\pi}{16}$ + $\frac{5\pi}{16}$, - $\cos\frac{\pi}{16}$ + $\cos\frac{7\pi}{16}$ ).

EP 0 416 311 A2

## APPENDIX A

*FIRSTADD PRINTAPL A1 DATED  89/07/27 14:34:24 ..... PAGE 1*

                        89/07/27 14:31:39 *** Function *FIRSTADD* ***
    ∇ N←FIRSTADD M;A0;A1;A2;A3;A4;A5;A6;A7;B0;B1;B2;B3;B4;B5;B6;B7;J

```
[1]   J←0
[2]   N←(8 8)ρ0
[3]  ⍝***********************
[4]  ⍝**** FIRST ON COLUMNS **
[5]  ⍝***********************
[6]  LP1:→(8<J←J+1)/NXT
[7]   V←M[;J]
[8]   A0←V[1]+V[8]
[9]   A1←V[2]+V[7]
[10]  A2←V[3]+V[6]
[11]  A3←V[4]+V[5]
[12]  A4←V[4]-V[5]
[13]  A5←V[3]-V[6]
[14]  A6←V[2]-V[7]
[15]  N[8;J]←V[1]-V[8]
[16]  B0←A0+A3
[17]  B1←A1+A2
[18]  B2←A1-A2
[19]  N[4;J]←A0-A3
[20]  N[5;J]←-A4+A5
[21]  N[6;J]←A5+A6
[22]  N[7;J]←A6+N[8;J]
[23]  N[1;J]←B0+B1
[24]  N[2;J]←B0-B1
[25]  N[3;J]←B2+N[4;J]
[26]  →LP1
[27] NXT:
[28] ⍝***********************
[29] ⍝***** NOW ON ROWS *****
[30] ⍝***********************
[31]  J←0
[32] LP2:→(8<J←J+1)/0
[33]  V←N[J;]
[34]  A0←V[1]+V[8]
[35]  A1←V[2]+V[7]
[36]  A2←V[3]+V[6]
[37]  A3←V[4]+V[5]
[38]  A4←V[4]-V[5]
[39]  A5←V[3]-V[6]
[40]  A6←V[2]-V[7]
[41]  N[J;8]←V[1]-V[8]
[42]  B0←A0+A3
[43]  B1←A1+A2
[44]  B2←A1-A2
[45]  N[J;4]←A0-A3
[46]  N[J;5]←-A4+A5
[47]  N[J;6]←A5+A6
[48]  N[J;7]←A6+N[J;8]
[49]  N[J;1]←B0+B1
[50]  N[J;2]←B0-B1
[51]  N[J;3]←B2+N[J;4]
[52]  →LP2
    ∇
```

                        89/07/27 14:31:07 *** Function *FIRSTINV* ***
    ∇ N←FIRSTINV M;A0;A1;A2;A3;A4;A5;A6;A7;B0;B1;B2;B3;B4;B5;B6;B7;J

```
[1]   J←0
[2]   N←(8 8)ρ0
[3]  ⍝***********************
[4]  ⍝**** FIRST ON COLUMNS **
[5]  ⍝***********************
```

28

```
FIRSTAID PRINTING A1 DATED  89/07/27 14:34:24 ..... PAGE 2
[6]  LP1:→(8<J←J+1)/NXT
[7]   V←M[;J]
[8]   A0←V[1]+V[2]
[9]   A1←V[1]-V[2]
[10] A2←V[3]-V[4]
[11] B0←A0+V[4]
[12] B1←A1+A2
[13] B2←A1-A2
[14] B3←A0-V[4]
[15] B7←V[8]
[16] B6←V[7]-B7
[17] B5←V[6]-B6
[18] B4←-V[5]+B5
[19] N[1;J]←B0+B7
[20] N[2;J]←B1+B6
[21] N[3;J]←B2+B5
[22] N[4;J]←B3+B4
[23] N[5;J]←B3-B4
[24] N[6;J]←B2-B5
[25] N[7;J]←B1-B6
[26] N[8;J]←B0-B7
[27] →LP1
[28]NXT:
[29]A***********************
[30]A***** NOW ON ROWS ******
[31]A***********************
[32] J←0
[33]LP2:→(8<J←J+1)/0
[34] V←N[J;]
[35] A0←V[1]+V[2]
[36] A1←V[1]-V[2]
[37] A2←V[3]-V[4]
[38] B0←A0+V[4]
[39] B1←A1+A2
[40] B2←A1-A2
[41] B3←A0-V[4]
[42] B7←V[8]
[43] B6←V[7]-B7
[44] B5←V[6]-B6
[45] B4←-V[5]+B5
[46] N[J;1]←B0+B7
[47] N[J;2]←B1+B6
[48] N[J;3]←B2+B5
[49] N[J;4]←B3+B4
[50] N[J;5]←B3-B4
[51] N[J;6]←B2-B5
[52] N[J;7]←B1-B6
[53] N[J;8]←B0-B7
[54] →LP2
     ∇
```

89/07/22 08:35:30 *** Function MULTINV1 ***

```
    ∇ N←MULTINV1 V;Z
[1]AACTS ON 8-VECTORS
[2] N←V
[3] N[3]←ROUND ST×V[3]÷512
[4] Z←ALPHAI ROTINV V[5],V[7]
[5] N[5]←Z[1]
[6] N[7]←Z[2]
[7] N[6]←ROUND ST×V[6]÷512
    ∇
```

89/07/22 08:35:39 *** Function MULTINV2 ***

```
    ∇ N←MULTINV2 V;Z
```

```
FIRSTADD PRINTAPL A1 DATED  89/07/27 14:34:24 ..... PAGE 3
[1]  ⍝ACTS ON 8-VECTORS
[2]  N←V
[3]  N[1]←ROUND ST×V[1]÷512
[4]  N[2]←ROUND ST×V[2]÷512
[5]  N[3]←2×V[3]
[6]  N[4]←ROUND ST×V[4]÷512
[7]  Z←BETAI ROTINV V[5],V[7]
[8]  N[5]←Z[1]
[9]  N[7]←Z[2]
[10] N[6]←2×V[6]
[11] N[8]←ROUND ST×V[8]÷512
     ∇
```

                                    89/07/27 14:32:24 *** Function MULTINV3 ***

```
   ∇ N←MULTINV3 M;A0;A1;A2;A3;M0;M1;M2;M3
[1]  ⍝M AND N ARE TWO (8,2) MATRICES
[2]  N←(8 2)⍴M
[3]  N[1;]←ALPHAI ROTINV M[1;]
[4]  N[2;]←ALPHAI ROTINV M[2;]
[5]  N[3;]←BETAI ROTINV M[3;]
[6]  N[4;]←ALPHAI ROTINV M[4;]
[7]  N[6;]←BETAI ROTINV M[6;]
[8]  N[8;]←ALPHAI ROTINV M[8;]
[9]  A0←M[5;1]+M[7;2]
[10] A1←M[5;2]-M[7;1]
[11] A2←M[5;1]-M[7;2]
[12] A3←M[5;2]+M[7;1]
[13] M0←2×A0
[14] M1←-2×A1
[15] M2←ROUND(ST×A2+A3)÷512
[16] M3←ROUND(ST×A2-A3)÷512
[17] N[5;1]←M0+M2
[18] N[5;2]←M1+M3
[19] N[7;1]←M3-M1
[20] N[7;2]←M0-M2
     ∇
```

                                    89/06/22 09:29:05 *** Function MULT1 ***

```
   ∇ N←MULT1 V;Z
[1] ⍝ACTS ON 8-VECTORS
[2] N←V
[3] N[3]←ROUND C4×V[3]÷512
[4] Z←ALPHA ROTATOR V[5],V[7]
[5] N[5]←Z[1]
[6] N[7]←Z[2]
[7] N[6]←ROUND C4×V[6]÷512
    ∇
```

                                    89/06/22 15:13:05 *** Function MULT2 ***

```
   ∇ N←MULT2 V;Z
[1] ⍝ACTS ON 8-VECTORS
[2] N←V
[3]  N[1]←ROUND C4×V[1]÷512
[4]  N[2]←ROUND C4×V[2]÷512
[5]  N[3]←ROUND .5×V[3]
[6]  N[4]←ROUND C4×V[4]÷512
[7]  Z←BETA ROTATOR V[5],V[7]
[8]  N[5]←Z[1]
[9]  N[7]←Z[2]
[10] N[6]←ROUND .5×V[6]
[11] N[8]←ROUND C4×V[8]÷512
     ∇
```

                                    89/07/27 14:32:39 *** Function MULT3 ***

```
   ∇ N←MULT3 M;A0;A1;A2;A3;M0;M1;M2;M3
[1] ⍝M AND N ARE TWO (8,2) MATRICES
```

```
FIRSTADD PRINTOUT A1 DATED   89/07/27 14:34:34 ..... PAGE 4
[2]   N←M
[3]   N[1;]←ALPHA ROTATOR M[1;]
[4]   N[2;]←ALPHA ROTATOR M[2;]
[5]   N[3;]←BETA ROTATOR M[3;]
[6]   N[4;]←ALPHA ROTATOR M[4;]
[7]   N[6;]←BETA ROTATOR M[6;]
[8]   N[8;]←ALPHA ROTATOR M[8;]
[9]   A0←M[5;1]-M[7;2]
[10]  A1←M[7;1]+M[5;2]
[11]  A2←M[5;1]+M[7;2]
[12]  A3←M[7;1]-M[5;2]
[13]  M0←ROUND(GAMMA×A0+A1)÷512
[14]  M1←ROUND(GAMMA×A0-A1)÷512
[15]  M2←ROUND(A2÷2)
[16]  M3←ROUND(-A3÷2)
[17]  N[5;1]←M0+M2
[18]  N[7;1]←M1+M3
[19]  N[5;2]←M1-M3
[20]  N[7;2]←M2-M0
      ∇
```

                                    89/07/27 08:01:12 *** Function POSTADD ***

```
      ∇ N←POSTADD M;V;A2;A5;A7;T;J
[1]  ⍝**********************
[2]  ⍝**** FIRST ON COLUMNS **
[3]  ⍝**********************
[4]   J←0
[5]  LP1:→(8<J←J+1)/NXT
[6]   V←M[;J]
[7]   A2←V[3]+V[4]
[8]   A5←V[6]+V[8]
[9]   A7←V[8]-V[6]
[10]  T←V[2]
[11]  V[2]←A5+V[7]
[12]  V[8]←A5-V[7]
[13]  V[7]←V[4]-V[3]
[14]  V[3]←A2
[15]  V[4]←A7-V[5]
[16]  V[6]←V[5]+A7
[17]  V[5]←T
[18]  M[;J]←V
[19]  →LP1
[20]NXT:
[21]⍝**********************
[22]⍝***** NOW ON ROWS ******
[23]⍝**********************
[24]  J←0
[25]LP2:→(8<J←J+1)/NXT2
[26]  V←M[J;]
[27]  A2←V[3]+V[4]
[28]  A5←V[6]+V[8]
[29]  A7←V[8]-V[6]
[30]  T←V[2]
[31]  V[2]←A5+V[7]
[32]  V[8]←A5-V[7]
[33]  V[7]←V[4]-V[3]
[34]  V[3]←A2
[35]  V[4]←A7-V[5]
[36]  V[6]←V[5]+A7
[37]  V[5]←T
[38]  M[J;]←V
[39]  →LP2
[40]NXT2:
```

```
[41]  N←M
      ∇
                                        89/07/27 14:31:53 *** Function POSTINV ***
      ∇ N←POSTINV M;V;B2;A2;A4;A5;A6;A7;T;J;B5;B6
[1]  A*************************
[2]  A**** FIRST ON COLUMNS **
[3]  A*************************
[4]  J←0
[5]  LP1:→(8<J←J+1)/NXT
[6]  V←M[;J]
[7]  A5←V[2]+V[8]
[8]  A7←V[6]+V[4]
[9]  B2←V[3]-V[7]
[10] T←V[5]
[11] V[5]←V[6]-V[4]
[12] V[4]←V[3]+V[7]
[13] V[3]←B2
[14] V[7]←V[2]-V[8]
[15] V[2]←T
[16] V[6]←A5-A7
[17] V[8]←A5+A7
[18] M[;J]←V
[19] →LP1
[20]NXT:
[21]A**********************.
[22]A***** NOW ON ROWS ******
[23]A***********************
[24] J←0
[25]LP2:→(8<J←J+1)/NXT2
[26] V←M[J;]
[27] A5←V[2]+V[8]
[28] A7←V[6]+V[4]
[29] B2←V[3]-V[7]
[30] T←V[5]
[31] V[5]←V[6]-V[4]
[32] V[4]←V[3]+V[7]
[33] V[3]←B2
[34] V[7]←V[2]-V[8]
[35] V[2]←T
[36] V[6]←A5-A7
[37] V[8]←A5+A7
[38] M[J;]←V
[39] →LP2
[40]NXT2:
[41] N←M
      ∇
                                        89/06/22 09:28:22 *** Function ROTATOR ***
      ∇ Z←Y ROTATOR X;M1;M2;M3
[1] Z←2ρ0
[2]AY IS ALPHA OR BETA
[3]AX IS VECTOR TO BE MULTIPLIED
[4] M1←ROUND(Y[3]×X[1]+X[2])÷512·
[5] M2←ROUND(Y[2]×X[2])÷512
[6] M3←ROUND(Y[1]×X[1])÷512
[7] Z[2]←M2-M1
[8] Z[1]←M3-M1
      ∇
                                        89/07/22 06:57:31 *** Function ROTINV ***
      ∇ Z←Y ROTINV X;M1;M2;M3
[1] Z←2ρ0
[2] AY IS ALPHA OR BETA
[3] AX IS VECTOR TO BE MULTIPLIED
```

```
FIRSTADD PRINTAPL A1 DATED  89/07/27 14:34:24 ..... PAGE 6
[4]  A(Y[1],Y[2],Y[3])÷512
[5]  M3←ROUND(Y[3]×X[1]+X[2])÷512
[6]  M2←ROUND(Y[2]×X[2])÷512
[7]  M1←ROUND(Y[1]×X[1])÷512
[8]  Z[1]←M2-M3
[9]  Z[2]←M3-M1
     ∇
```

```
                                        89/06/22 14:07:31 *** Function ROUND ***
     ∇ Y←ROUND X
[1]  ⍝ROUNDS TO NEAREST INTEGER
[2]  →(0>X)/NXT2
[3]  →(.5≤X-⌊X)/NXT1
[4]  Y←⌊X
[5]  →0
[6]  NXT1:
[7]  Y←⌈X
[8]  →0
[9]  NXT2:
[10] X←-X
[11] →(.5≤X-⌊X)/NXT3
[12] Y←⌊X
[13] →NXT4
[14] NXT3:
[15] Y←⌈X
[16] NXT4:
[17] Y←-Y
     ∇
```

```
                                        89/06/23 08:18:41 *** Function ROUNDMAT ***
     ∇ ROUNDMAT MAT;V;I;J;V1;V2
[1]  ⍝ROUNDS AN ENTIRE MATRIX
[2]  V←ρMAT
[3]  I←J←0
[4]  V1←V[1]
[5]  V2←V[2]
[6]  LP1:→(V2<J←J+1)/NXT2
[7]  LP2:→(V1<I←I+1)/NXT1
[8]  MAT[I;J]←ROUND MAT[I;J]
[9]  →LP2
[10] NXT1:
[11] I←0
[12] →LP1
[13] NXT2:
[14] ANS←MAT
     ∇
```

```
                                        89/07/27 14:29:48 *** Function RUN ***
     ∇ N←RUN M;V;A
[1]  ⍝RUN DCT ON (8 8) MATRIX
[2]  N←FIRSTADD M
[3]  A←⌈/⌈/|N
[4]  N[;1]←MULT1 N[;1]
[5]  N[;2]←MULT1 N[;2]
[6]  N[;3]←MULT2 N[;3]
[7]  N[;4]←MULT1 N[;4]
[8]  V←MULT3((8 1)ρN[;5]),(8 1)ρN[;7]
[9]  N[;5]←V[;1]
[10] N[;7]←V[;2]
[11] N[;6]←MULT2 N[;6]
[12] N[;8]←MULT1 N[;8]
[13] A←A,⌈/⌈/|N
[14] N←POSTADD N
[15] A←A,⌈/⌈/|N
[16] ⍝ROUNDMAT N÷STATIC⍝STATNDARD QUANTIZATION
```

```
[17] ROUNDMAT N÷STATIC2ꟼALL 1 QUANTIZATION
[18] ANS[1;1]←ANS[1;1]-64
[19] N←ANS
     ▽
```

                              89/07/27 14:30:25 *** Function *RUNINV* ***
```
     ▽ N←RUNINV M;V;A;ANS
[1] ꟼRUN DCT ON (8 8) MATRIX
[2]  M[1;1]←M[1;1]+64
[3]  ROUNDMAT(STATIC2×M)ꟼINVERSE WITH DEQUANTIZATION ALL 1
[4] ꟼROUNDMAT(STATIC×M)ꟼINVERSE WITH STANDARD DEQUANTIZATION
[5]  M←ANS
[6]  N←POSTINV M
[7]  N[;1]←MULTINV1 N[;1]
[8]  N[;2]←MULTINV1 N[;2]
[9]  N[;3]←MULTINV2 N[;3]
[10] N[;4]←MULTINV1 N[;4]
[11] V←MULTINV3((8 1)ρN[;5]),(8 1)ρN[;7]
[12] N[;5]←V[;1]
[13] N[;7]←V[;2]
[14] N[;6]←MULTINV2 N[;6]
[15] N[;8]←MULTINV1 N[;8]
[16] N←FIRSTINV N
[17] ROUNDMAT N÷64
[18] N←ANS×(.001≤|ANS)
     ▽
```

ALPHA PRINTAPL A1 DATED 89/07/27 14:33:53 ..... PAGE 1

*** Numeric ALPHA ***

.⁻277 669 196

*** Numeric ALPHAI ***

1338 554 946

*** Numeric BETA ***

⁻196 473 139

*** Numeric BETAI ***

1892 783 1338

*** Numeric C4 ***

362

*** Numeric GAMMA ***

181

*** Numeric ST ***

724

*** Numeric STATIC ***

```
128 122 105 151 192 251 221 135
133 185 203 248 289 506 360 199
146 188 219 295 418 468 390 161
132 222 270 321 480 643 407 161
144 244 387 527 544 685 446 170
151 305 452 473 509 514 384 160
212 384 441 443 446 412 281 121
159 282 274 254 247 173 123  60
```

*** NEW STATIC2 ***

```
0.125        0.1733799807  0.1633203706  0.1469844503  0.125
0.1733799807  0.2404849416  0.2265318616  0.2038732892  0.1733799807
0.1633203706  0.2265318616  0.2133883476  0.1920444392  0.1633203706
0.1469844503  0.2038732892  0.1920444392  0.172835429   0.1469844503
0.125         0.1733799807  0.1633203706  0.1469844503  0.125
0.0982118698  0.1362237767  0.1283199918  0.1154849416  0.0982118698
0.06764951252 0.09383256938 0.08838834765 0.07954741129 0.06764951252
0.03448742241 0.04783542905 0.04505998888 0.0405529186  0.03448742241
```

```
0.0982118698  0.06764951252 0.03448742241
0.1362237767  0.09383256938 0.04783542905
0.1283199918  0.08838834765 0.04505998888
0.1154849416  0.07954741129 0.0405529186
0.0982118698  0.06764951252 0.03448742241
0.07716457095 0.05315188092 0.02709659392
0.05315188092 0.03661165235 0.01866445851
0.02709659392 0.01866445851 0.009515058436
```

APPENDIX B

```
RUN FRINTAPL A1 DATED   89/08/24  08:38:34 ..... PAGE 1
                                  89/08/29 16:05:20 *** Function FIRSTADD ***
        ∇ N←FIRSTADD M;A0;A1;A2;A3;A4;A5;A6;A7;B0;B1;B2;B3;B4;B5;B6;B7;J
[1]   J←0
[2]   N←(8 8)ρ0
[3]   ⍝***********************
[4]   ⍝**** FIRST ON COLUMNS **
[5]   ⍝***********************
[6]   LP1:→(8<J←J+1)/NXT
[7]   V←M[;J]
[8]   A0←V[1]+V[8]
[9]   A1←V[2]+V[7]
[10]  A2←V[3]+V[6]
[11]  A3←V[4]+V[5]
[12]  A4←V[1]-V[8]
[13]  A5←V[2]-V[7]
[14]  A6←V[3]-V[6]
[15]  A7←V[4]-V[5]
[16]⍝***********************
[17]  B0←A0+A3
[18]  B1←A1+A2
[19]  B2←A0-A3
[20]  B3←A1-A2
[21]  B4←A4+A6
[22]  B5←A7-A5
[23]  B6←A4+A7
[24]  B7←A5
[25]⍝***********************
[26]  N[1;J]←B0+B1
[27]  N[2;J]←B0-B1 .
[28]  N[3;J]←B2-B3
[29]  N[4;J]←B3
[30]  N[5;J]←B4
[31]  N[6;J]←B5
[32]  N[7;J]←B6
[33]  N[8;J]←B7
[34]  →LP1
[35]NXT:
[36]⍝***********************
[37]⍝***** NOW ON ROWS ******
[38]⍝***********************
[39]  J←0
[40]LP2:→(8<J←J+1)/0
[41]  V←N[J;]
[42]  A0←V[1]+V[8]
[43]  A1←V[2]+V[7]
[44]  A2←V[3]+V[6]
[45]  A3←V[4]+V[5]
[46]  A4←V[1]-V[8]
[47]  A5←V[2]-V[7]
[48]  A6←V[3]-V[6]
[49]  A7←V[4]-V[5]
[50]⍝***********************
[51]  B0←A0+A3
[52]  B1←A1+A2
[53]  B2←A0-A3
[54]  B3←A1-A2
[55]  B4←A4+A6
[56]  B5←A7-A5
[57]  B6←A4+A7
[58]  B7←A5
[59]⍝***********************
[60]  N[J;1]←B0+B1
```

```
RUN PACKAGE A1 DATED  89/06/29 16:13:34 ..... PAGE 1
[61]  N[J;2]←B0-B1
[62]  N[J;3]←B2-B3
[63]  N[J;4]←B3
[64]  N[J;5]←B4
[65]  N[J;6]←B5
[66]  N[J;7]←B6
[67]  N[J;8]←B7
[68]  →LP2
      ▽
```

```
                                   89/06/29 16:11:04 *** Function MULT1 ***
      ▽ N←MULT1 V;Z
[1]ᴀACTS ON 8-VECTORS
[2]  N←V
[3]  N[4]←ROUND ST×V[4]÷512
[4]  Z←ALPHA ROTATOR V[5],V[6]
[5]  N[5]←Z[1]
[6]  N[6]←Z[2]
[7]  N[8]←ROUND ST×V[8]÷512
     ▽
```

```
                                   89/06/29 22:46:22 *** Function MULT2 ***
      ▽ N←MULT2 V;Z
[1]  ᴀACTS ON 8-VECTORS
[2]   N←V
[3]   N[1]←ROUND ST×V[1]÷512
[4]   N[2]←ROUND ST×V[2]÷512
[5]   N[3]←ROUND ST×V[3]÷512
[6]   N[4]←2×V[4]
[7]   Z←BETA ROTATOR V[5],V[6]
[8]   N[5]←Z[1]
[9]   N[6]←Z[2]
[10]  N[7]←ROUND ST×V[7]÷512
[11]  N[8]←2×V[8]
      ▽
```

```
                                   89/06/29 22:57:02 *** Function MULT3 ***
      ▽ N←MULT3 M;A0;A1;A2;A3;M0;M1;M2;M3
[1]  ᴀM AND N ARE TWO (8,2) MATRICES
[2]   N←M
[3]   N[1;]←ALPHA ROTATOR M[1;]
[4]   N[2;]←ALPHA ROTATOR M[2;]
[5]   N[3;]←ALPHA ROTATOR M[3;]
[6]   N[4;]←BETA ROTATOR M[4;]
[7]   N[7;]←ALPHA ROTATOR M[7;]
[8]   N[8;]←BETA ROTATOR M[8;]
[9]  ᴀ*****************************
[10]  A0←M[5;1]-M[6;2]
[11]  A1←M[6;1]+M[5;2]
[12]  A2←M[5;1]+M[6;2]
[13]  A3←M[6;1]-M[5;2]
[14]  M0←ROUND(GAMMA×A0-A1)÷512
[15]  M1←ROUND(GAMMA×A0+A1)÷512
[16]  M2←A2
[17]  M3←A3
[18]  N[5;1]←M0+M2
[19]  N[6;1]←M1+M3
[20]  N[5;2]←M1-M3
[21]  N[6;2]←M2-M0
      ▽
```

```
                                   89/07/05 11:50:59 *** Function PERMUTE ***
      ▽ N←PERMUTE M;T;J
[1]  ᴀ************************
[2]  ᴀ**** FIRST ON COLUMNS **
[3]  ᴀ************************
```

37

```
RUN PRINTAPL A1 DATED  89/06/24 06:00:04 ..... PAGE 4
[4]  J←0
[5] LP1:→(8<J←J+1)/NXT
[6]   V←M[;J]
[7]   T←V[2]
[8]   V[2]←V[5]
[9]   V[5]←T
[10]  T←V[3]
[11]  V[3]←V[4]
[12]  V[4]←V[8]
[13]  V[8]←V[7]
[14]  V[7]←T
[15]ค************************
[16]  M[;J]←V
[17]  →LP1
[18]NXT:
[19]ค************************
[20]ค***** NOW ON ROWS ******
[21]ค************************
[22]  J←0
[23]LP2:→(8<J←J+1)/NXT2
[24]  V←M[J;]
[25]  T←V[2]
[26]  V[2]←V[5]
[27]  V[5]←T
[28]  T←V[3]
[29]  V[3]←V[4]
[30]  V[4]←V[8]
[31]  V[8]←V[7]
[32]  V[7]←T
[33]ค************************
[34]  M[J;]←V
[35]  →LP2
[36]NXT2:
[37]  N←M
     ∇
```

```
                           89/07/05 11:50:49 *** Function POSTADD ***
     ∇ N←POSTADD M;V;A2;A5;A6;A7;T;J;B5;B6
[1]  ค************************
[2]  ค**** FIRST ON COLUMNS **
[3]  ค************************
[4]   J←0
[5] LP1:→(8<J←J+1)/NXT
[6]   V←M[;J]
[7]   A2←V[3]-V[4]
[8]   V[4]←V[4]+V[3]
[9]   A6←V[7]+V[8]
[10]  A7←V[7]-V[8]
[11]  V[3]←A2
[12]ค************************
[13]  B5←V[5]+A6
[14]  B6←V[6]+A7
[15]  V[7]←V[5]-A6
[16]  V[8]←A7-V[6]
[17]  V[5]←B5
[18]  V[6]←B6
[19]ค************************
[20]คT←V[2]
[21]คV[2]←V[5]
[22]คV[5]←T
[23]คT←V[3]
[24]คV[3]←V[4]
[25]คV[4]←V[8]
```

```
RUN PROGRAMS A1 DATED   89/08/24 09:45:34 ..... PAGE 4
[26]AV[6]←V[7]
[27]AV[7]←T
[28]A**********************
[29]  M[;J]←V
[30]  →LP1
[31]NXT:
[32]A**********************
[33]A***** NOW ON ROWS ******
[34]A**********************
[35]  J←0
[36]LP2:→(8<J←J+1)/NXT2
[37]  V←M[J;]
[38]  A2←V[3]-V[4]
[39]  V[4]←V[4]+V[3]
[40]  A6←V[7]+V[8]
[41]  A7←V[7]-V[8]
[42]  V[3]←A2
[43]A**********************
[44]  B5←V[5]+A6
[45]  B6←V[6]+A7
[46]  V[7]←V[5]-A6
[47]  V[8]←A7-V[6]
[48]  V[5]←B5
[49]  V[6]←B6
[50]A**********************
[51]AT←V[2]
[52]AV[2]←V[5]
[53]AV[5]←T
[54]AT←V[3]
[55]AV[3]←V[4]
[56]AV[4]←V[8]
[57]AV[8]←V[7]
[58]AV[7]←T
[59]A**********************
[60]  M[J;]←V
[61]  →LP2
[62]NXT2:
[63]  N←M
     ∇
```

89/07/05 09:25:33 *** Function ROTATOR ***

```
     ∇ Z←Y ROTATOR X;M1;M2;M3
[1] Z←2ρ0
[2]AY IS ALPHA OR BETA
[3]AX IS VECTOR TO BE MULTIPLIED
[4]  M3←ROUND(Y[3]×X[1]+X[2])÷512
[5]  M2←ROUND(Y[2]×X[2])÷512
[6]  M1←ROUND(Y[1]×X[1])÷512
[7]  Z[1]←M1-M3
[8]  Z[2]←M2+M3
     ∇
```

89/07/19 11:30:05 *** Function RUN ***

```
     ∇ N←RUN M;V
[1] ARUN DCT ON (8 8) MATRIX
[2]  N←FIRSTADD M
[3]  N[;1]←MULT1 N[;1]
[4]  N[;2]←MULT1 N[;2]
[5]  N[;3]←MULT1 N[;3]
[6]  N[;4]←MULT2 N[;4]
[7]  V←MULT3((8 1)ρN[;5]),(8 1)ρN[;6]
[8]  N[;5]←V[;1]
[9]  N[;6]←V[;2]
[10] N[;7]←MULT1 N[;7]
```

```
RUN IPRNTAPE AT DATED  83/08/24 08:53:34 ..... PAGE 3
[11] N[;3]←MULT2 N[;3]
[12] N←POSTADD N
[13]ⁿN←DIAG2+.×N+.×DIAG2
[14] N←PERMUTE N
[15] N←DIAG2+.×N+.×DIAG2
[16] N←N×(.001≤|N)
     ∇
```

PARAMETERS

ALPHA = 946    392    277

BETA  = 1338   554    392

GAMMA = 362

ST    = 724

FIG.1

FIG.2

EP 0 416 311 A2

# FIG.3

$m_1$

$\alpha_1 = \cos\frac{3\pi}{8} - \cos\frac{\pi}{8}$

$\alpha_2 = \cos\frac{3\pi}{8} + \cos\frac{\pi}{8}$

$\alpha_3 = \cos\frac{3\pi}{8}$

# FIG.4

$m_2$

$$\beta_1 = \frac{\sqrt{2}}{2}\left(\cos\frac{3\pi}{8} - \cos\frac{\pi}{8}\right)$$

$$\beta_2 = \frac{\sqrt{2}}{2}\left(\cos\frac{3\pi}{8} + \cos\frac{\pi}{8}\right)$$

$$\beta_3 = \frac{\sqrt{2}}{2}\cos\frac{3\pi}{8}$$

$m_3$    FIG.5

# FIG.6

# FIG.7

# FIG.8

# FIG.9

$R_2$

# FIG. 10